(19) Europäisches Patentamt
European Patent Office
Office européen des brevets

(11) **EP 2 966 312 A1**

(12) **EUROPEAN PATENT APPLICATION**
published in accordance with Art. 153(4) EPC

(43) Date of publication:
**13.01.2016  Bulletin 2016/02**

(51) Int Cl.:
**F16F 7/12** (2006.01)  **F16F 7/00** (2006.01)

(21) Application number: **14760174.4**

(22) Date of filing: **03.03.2014**

(86) International application number:
**PCT/JP2014/055343**

(87) International publication number:
**WO 2014/136733 (12.09.2014 Gazette 2014/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.03.2013  JP 2013042208**

(71) Applicant: **Nippon Steel & Sumitomo Metal Corporation**
**Tokyo 100-8071 (JP)**

(72) Inventors:
• **KOGA, Atsuo**
  **Tokyo 100-8071 (JP)**
• **OHISHI, Hiroshi**
  **Tokyo 100-8071 (JP)**

(74) Representative: **Vossius & Partner**
**Patentanwälte Rechtsanwälte mbB**
**Siebertstrasse 3**
**81675 München (DE)**

(54) **IMPACT-ABSORBING COMPONENT**

(57)   The invention provides an impact absorbing component capable of stable bellows-shaped crushing deformation irrespective of the direction an impact load is exerted in, with a short bucking wavelength and large buckling load. A laminated metal sheet (9) (impact absorbing component) includes a member that is formed by working the laminated metal sheet (9), in which surface layers (5A, 5B) made from metal sheets having a higher Young's modulus and density than those of a core layer (10) are laminated onto both faces of the core layer (10), into a profile including at least two ridge lines (3), and that configures 50% or more of the maximum peripheral length of component cross-sections, wherein a sheet thickness ratio ($t_c t_f$) of the sheet thickness ($t_c$) of the core layer to the sheet thickness ($t_f$) of the surface layers (5A, 5B) is 10.0 or less.

FIG.3

EP 2 966 312 A1

**Description**

Technical Field

The present invention relates to an impact absorbing component employed in a means of transport such as an automobile.

Background Art

Transport related safety standards are increasing year after year, and protecting cabin occupants in the event of a collision has become of utmost importance, even when detrimental to the transport function. Therefore, application of high strength steel sheet to frames surrounding cabins is progressing with the objective of absorbing energy during a collision and alleviating the impact transmitted to inside the cabin, and improvements to collision safety are being achieved.

Moreover, recently not only collision safety, but also repairability following a collision is being considered, and an increasing number of vehicle types absorb impact using replaceable impact absorbing components such as a crash box. Such impact absorbing components are fitted to the front face and rear face of the cabin, and are fitted such that the impact absorbing direction of the impact absorbing component is along the length direction of the automobile. The impact absorbing component undergoes crushing deformation along the impact absorbing direction during a collision, thereby absorbing the impact energy. Such impact absorbing components are therefore required to have the following characteristics:

(1) to have a high impact energy absorbing capacity;
(2) to be capable of absorbing collision energy even when the impact load is exerted from a direction intersecting with the impact absorbing direction (for example, an inclined direction at an angle of 10° to the impact absorbing direction) due to automobile collisions not necessarily being parallel to the impact absorbing direction of the impact absorbing component; and
(3) to be light weight in order to secure fuel efficiency.

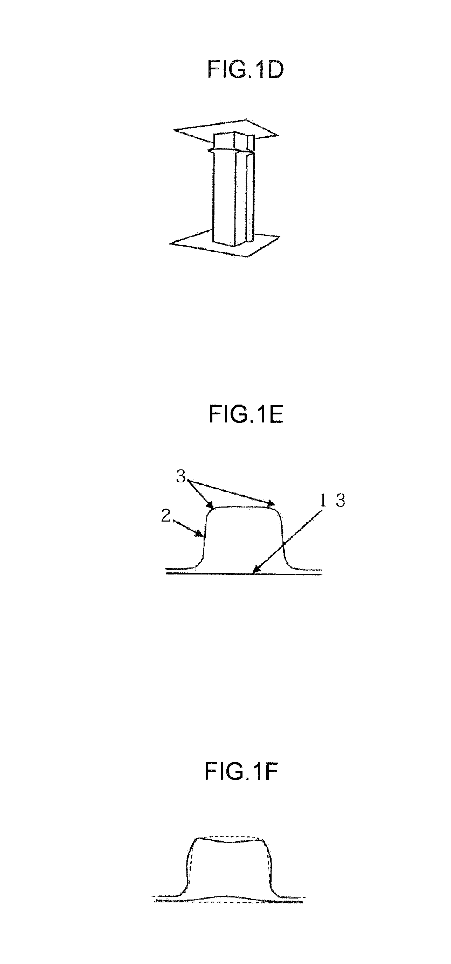

The profile of an impact absorbing component is generally a hollow profile such as a box shape (see Fig. 1E) having a closed cross-section in which a back plate is welded using flanges provided to a component having a hat shaped cross-section profile, as described by Journal of Society of Automotive Engineers of Japan, No. 7 (1974), p. 60.

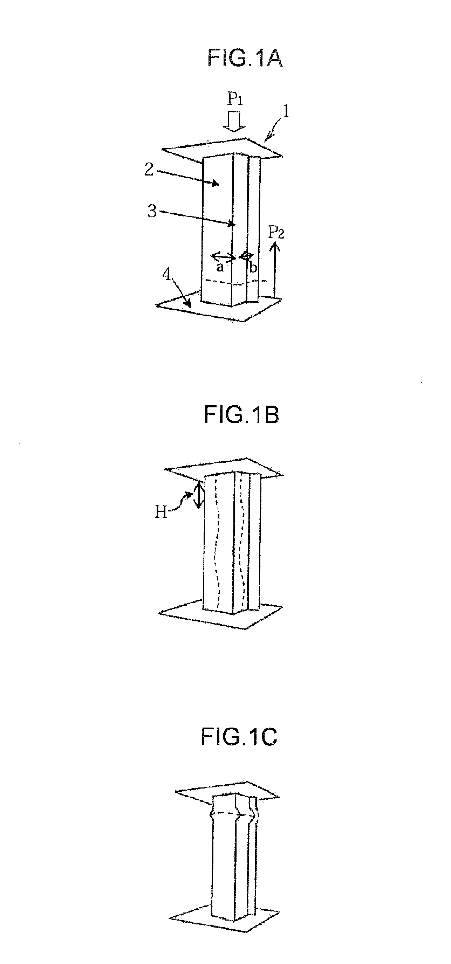

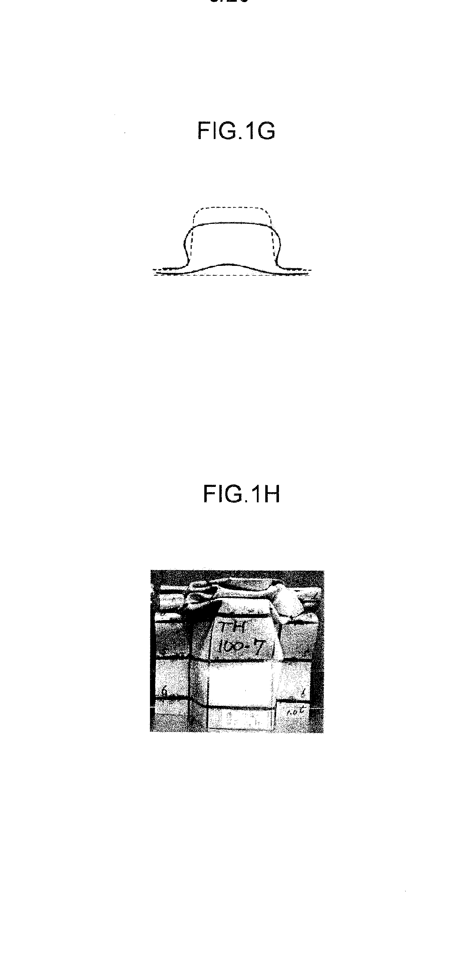

The deformation behavior of impact absorbing components when absorbing impact energy is explained with reference to Fig. 1A to Fig. 1H. Fig. 1A to Fig. 1D are perspective views from before deformation to completion of initial buckling deformation. In the present specification, the impact absorbing direction is a direction orthogonal to an installation face 4 when an impact absorbing component 1 is installed such that a ridge line direction of the impact absorbing component 1 is an up-down direction (arrow P2 in Fig. 1A). Moreover, Fig. 1E to Fig. 1G illustrate profiles of horizontal cross-sections orthogonal to the impact absorbing direction (the arrow P2) taken at respective deformation times. Note that the dashed line in Fig. 1B indicates deformation behavior of a central portion of a side face 2 immediately after an impact has been applied, and the dashed lines in Fig. 1F and Fig. 1 G show the horizontal cross-section before deformation.

When an impact load P1 is applied along the impact absorbing direction (the arrow P2), first, periodic elastic deformation occurs (with period H) in which the central portion of the side face 2, which has low rigidity, bulges (or indents) (shown by the dashed line in Fig. 1B and the solid line in Fig. IF) in an out-of-plane direction (a direction passing orthogonally through the face). However, a ridge line 3 of high rigidity is compressively deformed in a height direction. Herein, elastic deformation occurring in a side face is equivalent to elastic buckling of a plate simply supported at its periphery as described in Buckling Theory by Tymoshenko, Corona Publishing, 1971, p221-225 (referred to simply as "Tymoshenko" hereafter). According to the principle of least action, the bucking wavelength H is equivalent to the plate width (the width of the side face 2 (the separation between ridge lines)).

Moreover, when deformation progresses along the impact absorbing direction (the arrow P2), the elastic deformation of the side face 2 spreads out from a central portion toward the ridge line 3, and the out-of-plane deformation also increases. The amount of compressive strain also increases at the ridge line 3. Stress concentrates at a location where the amount of elastic deformation is greatest at the point in time when the out-of-plane deformation of the side face 2 reaches the ridge line 3, and folding of the ridge line 3 occurs. Localized plastic buckling (crease shaped deformation) then starts at both the side face 2 and the ridge line 3 (the dashed line portion in Fig. 1C, and Fig. 1G). When deformation progresses further, the ridge line 3 and the side face 2 completely fold so as to make contact, completing the initial period of buckling deformation (Fig. 1D). The crushing displacement at this time matches the period H. Similar buckling deformation then begins at another cross-section. It is known that repeated buckling deformation like that described above causes crushing deformation of the impact absorbing component 1 into a bellows-shape (accordion-shape) as illustrated in Fig. 1H, absorbing impact energy (the Journal of Society of Automotive Engineers of Japan).

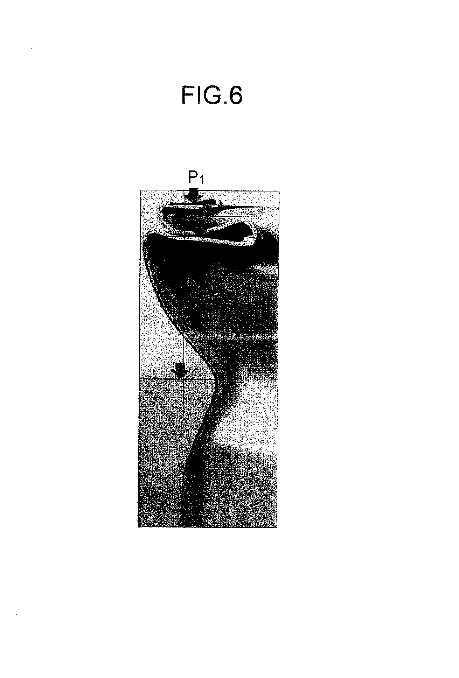

Hereafter in the present specification, H is defined as the buckling wavelength during crushing deformation, crushing deformation into a bellows-shape as illustrated in Fig. 6 by deformation in the impact absorbing direction is defined as axial crushing, and cross-sections sectioned orthogonally to the impact absorbing direction are defined as the component cross-sections.

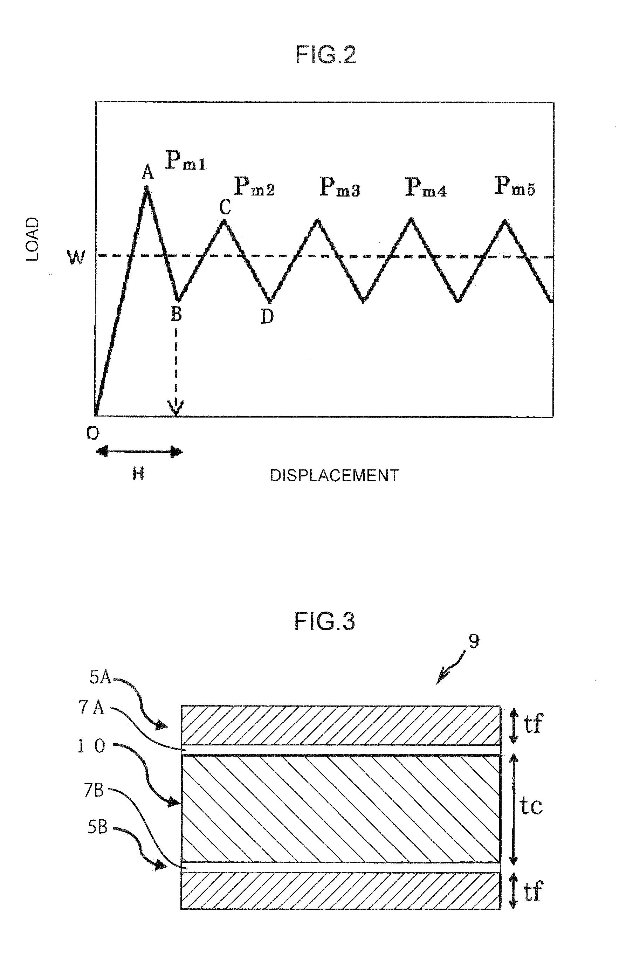

Next, explanation follows regarding a relationship between the displacement at this time in the impact absorption direction and the load, with reference to Fig 2. The load rises (from O to A in Fig. 2) until a fold occurs in the ridge line 3 to which the impact load is applied (corresponding to the deformation from Fig. 1B to Fig. 1C), and the maximum load $Pm_1$ is reached during the initial buckling deformation. The load then falls (from A to B in Fig. 2) when plastic buckling of the ridge line 3 starts, due to the amount of energy that the ridge line 3 is capable of absorbing decreasing as the plastic buckling progresses (corresponding to deformation from Fig. 1C to Fig. 1D). Then, when the initial buckling deformation has finished due to the side face 2 completely folding and making contact with itself, a second period of deformation starts in a similar manner, the load rises until the ridge line 3 folds (from B to C in Fig. 2), and the load falls from the start until completion of localized plastic buckling (from C to D in Fig. 2). From then on, the displacement-load behavior repeats. As a result, the applied load also repeatedly rises and falls with a period H as illustrated in Fig. 2, together with deformation into a bellows-shape (accordion-shape) of period H. Here, the point C and the point E in Fig. 2 are, respectively, a maximum load $Pm_2$ during the second bucking deformation and a maximum load $Pm_3$ during the third bucking deformation. The reason that the maximum load is smaller than $Pm_1$ from the second time onwards is that axial deviation occurs due to the initial buckling, and the load applied to the ridge line 3 from the second period onwards becomes a biased load.

The impact absorbing component exhibits a displacement-load curve profile and crushing deformation as illustrated in Fig. 1A to Fig. 1H and Fig. 2, and as described above, and the following measures must therefore be taken in order to satisfy (1) above.

The energy absorbed during a collision is equivalent to the area under the displacement-load curve, namely, (W: average load) $\times$ (displacement). Accordingly, it is important to make W high, and W is higher the higher $Pm_i$ (i = 1, 2, 3, ..., n) is and the higher the buckling deformation count n is. It is therefore effective to increase $Pm_i$ by increasing the tensile strength or buckling moment of the configuring sheet material, while making the buckling wavelength shorter and increasing the buckling deformation count n.

Moreover, when the impact load is exerted from an angled direction, the load applied to the impact absorbing component is a biased load. It is accordingly necessary to design the component profile and the material strength such that the area under the displacement-load curve is high even for biased loads.

On the other hand, recently there have been strong demands for a vehicle body weight reduction from the viewpoints of decreasing $CO_2$ emissions and improving fuel consumption. Moreover, although large scale decreases in $CO_2$ are anticipated in next generation automobiles such as electric automobiles, due to the overall vehicle weight increasing by installing a battery, sufficient cruising distances have not been obtainable, and have become a great barrier to the spread of next generation automobiles. Such viewpoints have also given rise to strong demands for large scale weight reduction in materials and components configuring automobiles.

In order to achieve the above weight reduction (3), not only does the weight of the component itself need to be reduced, but it is also important to make the volume of the component smaller, and to prevent an increase in the volume of the peripheral members. There is accordingly a need for materials and a profile design that enable configuring material to be omitted and enable an improvement in impact absorption energy per unit volume to be achieved, at the same time as configuring the component with a reduced weight member.

The following technologies are already known for satisfying the above characteristics (1) to (3). Countermeasures have been taken from the perspectives of both material and component profile.

For example, there is a description in Japanese Patent No. 2783100 of a form of retained austenite that contributes to impact absorption effect. By defining chemical components and manufacturing processes capable of obtaining a form of retained austenite steel exhibiting excellent collision performance, the described invention improves the collision performance of steel sheet including retained austenite. The aim is to raise the tensile strength of the steel sheet and to increase $Pm_i$. However, there is no increase in the number of times of buckling deformation due to there being no bucking wavelength H reduction effect. As a result, even though the $Pm_i$ is increased, it is difficult to achieve a large increase in the absorption energy. In particular, it is difficult to make the component more compact and achieve a weight reduction due to difficulties in absorbing sufficient impact when the impact absorbing component is made smaller along the impact absorption direction.

Moreover, an impact absorbing component made from fiber reinforced resin is described in JP-A No. H07-224874. Successive failures occur due to employing a brittle resin material, enabling the impact energy absorption efficiency to be increased. There is also an aim of raising the buckling strength by reinforcement with high strength fibers. In this invention, in contrast to deformation of plastic materials such as steel, the impact energy can be absorbed by the whole of the buckling deformation section, giving high impact energy absorption efficiency. The $Pm_i$ is also increased by the reinforcing fibers. A weight reduction is also easily obtained due to being configured by a light weight material. However, there are still the problems of poor manufacturability and high cost. Moreover, shards are scattered in the periphery due to the brittle failure, and so there is a conceivable possibility that this will cause damage to people and objects in the periphery.

An impact absorbing component is described in Jidoushagijutsu, vol.47, no. 4 (1993), p.57 with notches called crash beads machined into side faces. This is technology that aims to make the bucking wavelength shorter and increase the number of times buckling deformation occurs by machining notches at small intervals along side faces to act as buckling deformation origins during a collision. However, there is a high probability that the true $Pm_i$ of the material cannot be achieved due to the notch insertion, and W cannot be efficiently increased. Moreover, sometimes the notches do not function as the buckling deformation origin points to impact load from a direction intersecting with the impact absorption direction, and the bucking wavelength cannot be made shorter.

Moreover, an impact absorbing component is described in JP-A No. 2006-207724 configured with a polygonal closed cross-section with grooves indented toward the inside, and provided with a difference in bending moment at a portion of the cross-sections. The separation between ridge lines can be made small due to the polygonal cross-section, and the bucking wavelength can be made short. Moreover, it is possible to suppress axial deviation in ridge lines and prevent biased load by forming the grooves indented in opposite directions toward the inside and outside. Stable crushing deformation is achieved as a result. By providing a difference in bending moment, the axial direction of crushing deformation in response to a collision from an angled direction can be corrected, enabling sufficient impact energy absorption to be achieved. However, due to the ridge line separation being determined by the bucking wavelength, the ridge line separation must be made quite small in order to make the bucking wavelength sufficiently short and the W sufficiently large, imposing limitations on the degrees of freedom in profile. Moreover, as well as the profile limitations due the complicated profile, the impact absorbing component is configured by a single steel member, and so it is difficult to achieve a large weight reduction in a vehicle body.

Moreover, a sandwich panel is described in JP-A No. 2012-81826 in which a metal core member including multiple openings is sandwiched between two metal skin members. However, the peripheral edges of the sandwich panel are solid portions not formed with multiple openings, resulting in a longer bucking wavelength and a smaller amount of impact energy absorption due to higher rigidity than at the portions formed with openings. The changes in rigidity are also large within a single panel, making it difficult to achieve stable crushing deformation.

As described above, although there are countermeasures in materials and structure of impact absorbing components, an impact absorbing component capable of sufficiently satisfying the characteristics has not yet been developed.

SUMMARY OF INVENTION

Technical Problem

An object of the present invention is to provide an impact absorbing component capable of realizing the characteristics of:

(a) being able to achieve stable bellows-shaped crushing deformation;
(b) having a large maximum load $Pm_i$ during buckling deformation;
(c) having a short bucking wavelength H;
(d) being able to achieve (a) to (c) irrespective of the direction in which impact load is exerted;
(e) being able to achieve (a) to (d) with comparatively few profile limitations; and
(f) being able to raise the impact energy absorption efficiency with a simple component profile and being able to achieve a large weight reduction.

Solution to Problem

The present inventors have, as a result of stringent efforts to solve the above problems, discovered the following. Namely, a laminated metal sheet, of uniform cross-section configured by lamination bonding a core layer between a pair of surface layers made from metal sheet, is applied to an impact absorbing component formed by working the laminated metal sheet into a profile including at least two ridge lines. It has been discovered that doing so raises the average load and enables stable bellows-shaped crushing deformation when an impact load is exerted on one impact absorption direction end portion of the component. The present invention has been completed based on this knowledge.

The present invention is summarized below.

(1) An impact absorbing component that absorbs impact energy when impact load is exerted on one impact absorbing direction end portion of the component, the impact absorbing component including a member that is formed, by working a laminated metal sheet of uniform cross-section configured by lamination bonding surface layers of sheet metal having a higher Young's modulus and density than a Young's modulus and a density of a core layer onto both faces of the core layer, into a profile including at least two ridge lines, and that configures 50% or more of the maximum peripheral length of component cross-section, wherein a sheet thickness ratio ($t_c/t_f$) of the sheet thickness of the core layer ($t_c$) to the sheet thickness of the surface layers ($t_f$) is 10.0 or less.

(2) The impact absorbing component of (1), wherein the profiles of component cross-sections of the impact absorbing component are all open cross-section profiles.

(3) The impact absorbing component of (1), wherein a portion of the profiles of component cross-sections of the impact absorbing component are open cross-section profiles.

(4) The impact absorbing component of (1), wherein the profiles of component cross-sections of the impact absorbing component are all closed cross-section profiles.

(5) The impact absorbing component of any one of (1) to (4), wherein the laminated metal sheet has a Young's modulus ratio ($E_c/E_f$) of the core layer Young's modulus ($E_c$) to the surface layer Young's modulus ($E_f$) of from 1/10 to 1/100000.

(6) The impact absorbing component of any one of (1) to (5), wherein the Young's modulus ratio ($E_c/E_f$) is from 1/10 to 1/1000.

(7) The impact absorbing component of any one of (1) to (6), wherein a separation between the ridge lines is at least 10 mm.

(8) The impact absorbing component of any one of (1) to (7), wherein a shear bond strength between the surface layers and the core layer is 25 MPa or greater.

(9) The impact absorbing component of any one of (1) to (8), wherein bonding lamination between the surface layers and the core layer is bonding by brazing filler metal or electro conductive adhesive.

(10) An impact absorbing component that absorbs impact energy when impact load is exerted on one impact absorbing direction end portion of the component, the impact absorbing component including a member formed by working a laminated metal sheet of uniform cross-section configured by laminating surface layers of sheet metal having a higher Young's modulus than a Young's modulus of a core layer onto both faces of the core layer, with a sheet thickness ratio ($t_c/t_f$) of the sheet thickness of the core layer ($t_c$) to the sheet thickness of the surface layers ($t_f$) of from 2.0 to 7.0.

(11) The impact absorbing component of (10), wherein the sheet thickness ratio ($t_c/t_f$) is from 3.5 to 5.0.

(12) The impact absorbing component of (10) or (11), wherein the Young's modulus ratio ($E_c/E_f$) is from 1/10 to 1/1000.

(13) The impact absorbing component of any one of (10) to (12), wherein the laminated metal sheet is worked into a profile including at least four ridge lines, and respective spacings between the ridge lines are from 50 mm to 80 mm.

(14) The impact absorbing component of any one of (10) to (13), wherein the laminated metal sheet further includes a bonding layer between the surface layers and the core layer, and the shear modulus of the bonding layer is from 30 MPa to 500 MPa. Advantageous Effects of Invention

According to the present invention, an impact absorbing component can be provided that satisfies the above (a) to (e). As a result, use of the impact absorbing component of the present invention enables an occupant in a cabin to be protected not only from a face-on collision, but also from a collision from an angled direction. Moreover, due to absorbing impact energy without damaging a bonding member, maintenance is also easy and efficient. Moreover, the impact absorbing component of the present invention is capable of sufficiently absorbing impact energy for a collision as described above with comparatively few limitations to profile, enabling compact housing and not leading to an increase in the weight of peripheral members. A weight reduction can also be achieved in the component itself due to configuring from a light weight material. This is accordingly also advantageous in raising fuel efficiency.

BRIEF DESCRIPTION OF DRAWINGS

Fig. 1 to Fig. 17 relate to a first exemplary embodiment.

Fig. 1A is a perspective view illustrating typical deformation behavior when load is exerted in an impact absorption direction.
Fig. 1B is a perspective view illustrating typical deformation behavior when load is exerted in an impact absorption direction.
Fig. 1C is a perspective view illustrating typical deformation behavior when load is exerted in an impact absorption direction.
Fig. 1D is a perspective view illustrating typical deformation behavior when load is exerted in an impact absorption direction.

Fig. 1E is a perspective view illustrating typical deformation behavior when load is exerted in an impact absorption direction.

Fig. 1F is a perspective view illustrating typical deformation behavior when load is exerted in an impact absorption direction.

Fig. 1G is a perspective view illustrating typical deformation behavior when load is exerted in an impact absorption direction.

Fig. 1H is a photograph illustrating typical deformation behavior when load is exerted in an impact absorption direction.

Fig. 2 is a graph of a typical load-displacement curve when load is exerted in an impact absorption direction.

Fig. 3 is a cross-section illustrating a configuration of a laminated metal sheet.

Fig. 4A is a schematic diagram illustrating deformation behavior of surface layers and a core layer during buckling deformation of a laminated metal sheet.

Fig. 4B is a schematic diagram illustrating deformation behavior of surface layers and a core layer during buckling deformation of a laminated metal sheet.

Fig. 4C is a schematic diagram illustrating deformation behavior of surface layers and a core layer during buckling deformation of a laminated metal sheet.

Fig. 4D is a schematic diagram illustrating deformation behavior of surface layers and a core layer during buckling deformation of a laminated metal sheet.

Fig. 4E is a schematic diagram illustrating deformation behavior of surface layers and a core layer during buckling deformation of a laminated metal sheet.

Fig. 5 is a perspective view illustrating deformation behavior when load is exerted in an impact absorption direction on a member formed with only one ridge line.

Fig. 6 is a photograph illustrating typical axial deviation when load is exerted in an impact absorption direction.

Fig. 7A is a perspective view illustrating an impact absorbing component having a portion of open cross-section profiles employed in examples.

Fig. 7B is a cross-section, at A in Fig. 7A, illustrating an impact absorbing component with a portion of open cross-section profiles employed in examples.

Fig. 7C is a cross-section, at B in Fig. 7A, illustrating an impact absorbing component with a portion of open cross-section profiles employed in examples.

Fig. 8 is a photograph illustrating "V-shaped" deformation.

Fig. 9A is a schematic diagram illustrating buckling deformation in a case in which the thickness configuration of a laminated metal sheet has changed.

Fig. 9B is a schematic diagram illustrating buckling deformation in a case in which the thickness configuration of a laminated metal sheet has changed.

Fig. 10 is a perspective view illustrating an example of an application of the present invention to an impact absorbing component.

Fig. 11A is a cross-section illustrating an impact absorbing component of open cross-section profile employed in examples.

Fig. 11B is a perspective view illustrating an impact absorbing component of open cross-section profile employed in examples.

Fig. 12A is a cross-section illustrating an impact absorbing component of closed cross-section profile employed in examples.

Fig. 12B is a perspective view illustrating an impact absorbing component of closed cross-section profile employed in examples.

Fig. 13 is an explanatory diagram illustrating a member including a polygonal component cross-section profile including plural ridge lines employed in examples.

Fig. 14 is a perspective view illustrating an impact absorbing component with a portion of open cross-section profiles employed in examples.

Fig. 15A is a cross-section illustrating a circular cylinder shaped impact absorbing component employed in comparative examples.

Fig. 15B is a cross-section, at C in Fig. 15A, illustrating a circular cylinder shaped impact absorbing component employed in comparative examples.

Fig. 16A is a perspective view illustrating a member configured with only one ridge line employed in comparative examples.

Fig. 16B is a cross-section, at D in Fig. 16A, illustrating a member configured with only one ridge line employed in comparative examples.

Fig. 17 is a cross-section illustrating a laminated metal sheet including a wire mesh in a core layer.

Fig. 18A to Fig. 20 related to a second exemplary embodiment.

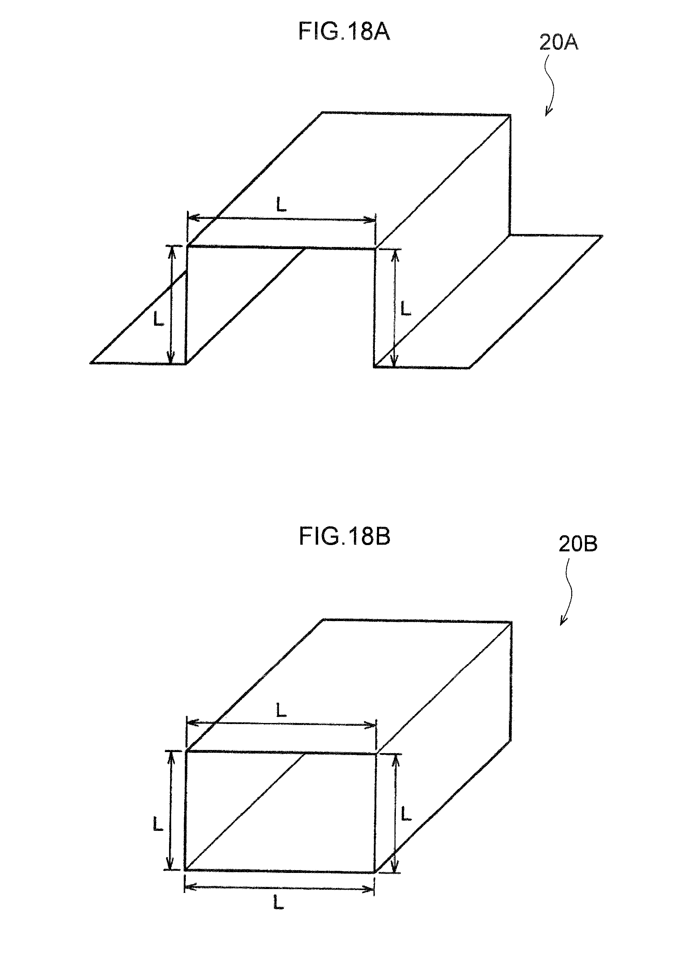

Fig. 18A is a perspective view illustrating an example of a shape of an impact absorbing component.

Fig. 18B is a perspective view illustrating another example of a shape of an impact absorbing component.

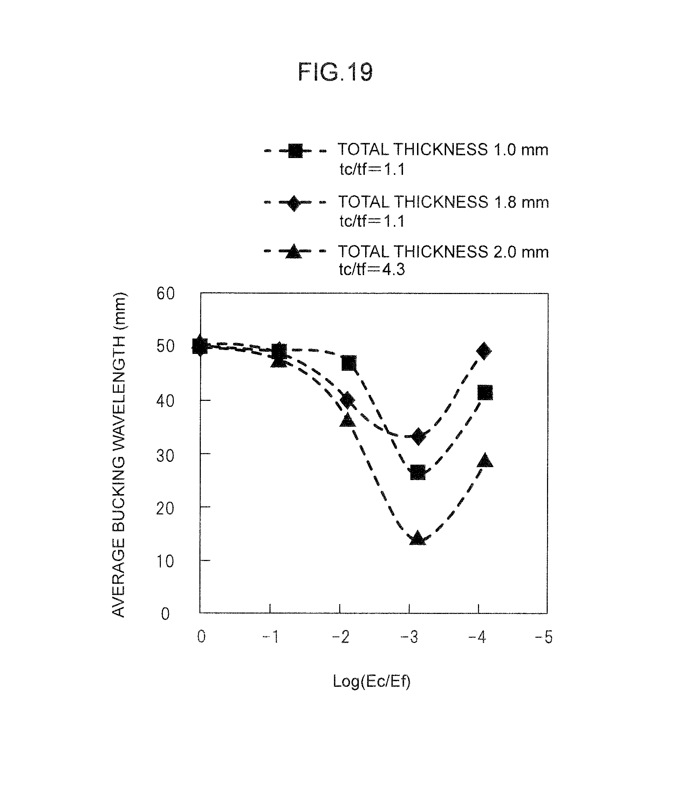

Fig. 19 is a graph illustrating average bucking wavelengths against $E_c/E_f$ for an Example 103, and Comparative Examples 101 and 102.

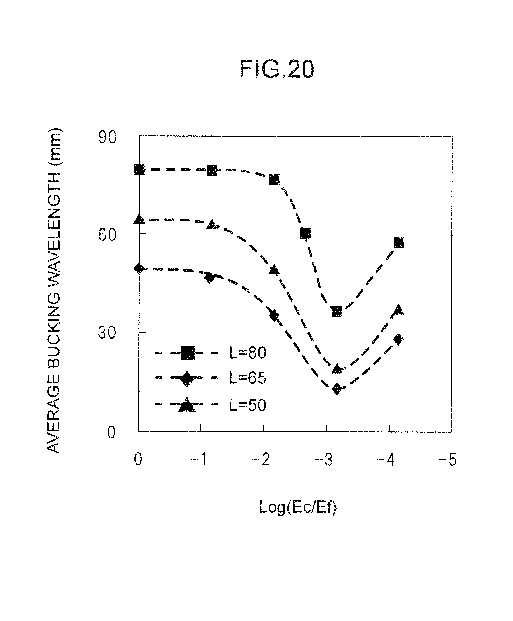

Fig. 20 is a graph illustrating average bucking wavelengths for profiles of impact absorbing components.

DESCRIPTION OF EMBODIMENTS

Explanation follows regarding an exemplary embodiment of the present invention, with reference to the drawings. Elements having essentially the same functional configuration are allocated the same reference numerals in the present specification and drawings, and duplicate explanation thereof is omitted.

First Exemplary Embodiment

The present exemplary embodiment is an impact absorbing component that absorbs impact energy when impact load is exerted onto the component at one end portion in the impact absorption direction. The impact absorbing component is configured including a member formed into a profile including at least two ridge lines, by working a laminated metal sheet of uniform cross-section configured by lamination bonding sheet metal onto both faces of a core layer having appropriate Young's modulus and density. In the present specification, in cases in which an impact absorbing component has straight line portions in the profiles of cross-sections orthogonal to an impact absorption direction of the impact absorbing component, a ridge line is a line connecting the angled portions (having an angle of over 0° but less than 180°) formed between the straight line portions along the impact absorption direction (see the ridge line 3 in Fig. 1).

As illustrated in Fig. 3, a laminated metal sheet 9 for configuring the impact absorbing component of the present exemplary embodiment has a structure in which metal sheets (surface layers 5A, 5B) are respectively laminated onto both faces of a core layer 10, namely has a structure in which the core layer 10 is laminated onto the surface layer 5A, and then the surface layer 5B is further laminated thereon. In the present exemplary embodiment, the core layer 10 is a plate shaped layer having a Young's modulus ($E_c$) and a density less than a Young's modulus ($E_f$) and a density of the surface layers 5A, 5B. The core layer 10 is preferably uniformly present across the entire cross-section of the laminated metal sheet 9. The Young's modulus ($E_c$) of the core layer 10 may be evaluated by tensile testing according to JIS Z2241 (metal materials) and JIS K7113. When the core layer 10 is a structural body combined from plural substances, the Young's modulus ($E_c$) is the coaxial stress-strain proportionality constant (modulus of longitudinal elasticity) of the structural body.

A uniform cross-section indicates that the surface layers and the core layer are present uniformly across the entire cross-section of the laminated metal sheet. Uniform includes periodic (ordered) configurations such as wire mesh. The periodicity is not limited to being constant, and may vary slightly. Configurations that, across the entire cross-section, combine a periodic portion with a non-periodic portion are not encompassed by the term uniform.

The impact absorbing component of the present exemplary embodiment is capable of efficiently absorbing impact energy by utilizing axial crushing deformation (Fig. 1 H) of the laminated metal sheet 9 worked into a profile including at least two ridge lines. It is accordingly envisaged that during impact energy absorption, 50% or more of the deformation mode of the impact absorbing component is by application of impact load from a direction within a range in which deformation is by an axial crushing mode. The input direction of the impact load to satisfy such a condition differs according to the magnitude of the impact load and the speed, however, the input direction intersects the impact absorption direction at an angle that is roughly 0° or greater, but less than 60°. When 60° or greater, the deformation mode of the component under impact load is often predominantly a bending crushing deformation mode under lateral load (load at right angles to the impact absorbing component) rather than axial crushing. The input direction of the impact load is preferably set so as to be 45° or less, and more preferably 30° or less. The proportion occupied by the axial crushing deformation mode is thereby larger, enabling even more efficient impact energy absorption. Application to impact absorbing components in transportation is also envisaged, and so the speed at which impact load is applied is envisaged to be from 1 m/h to 500 km/h.

The core layer 10 of the laminated metal sheet 9 is a plate shaped layer with a lower Young's modulus and density than the metal sheets configuring the surface layers 5A, 5B. It is sufficient for the plate shaped layer to have a Young's modulus and density lower than those of the surface layers 5A, 5B, and the substance and structure thereof is not particularly limited, as described below. Thus working is into an "L-shaped profile" when there is a single ridge line 3, or into a "U-shaped profile or S-shaped profile" when there are two or more of the ridge line 3 present at one or more location. There are four of the ridge lines 3 present in the hat shaped profile of Fig. 1E.

Detailed explanation next follows regarding the reason the impact absorbing component of the present exemplary embodiment is able to efficiently absorb energy.

The impact absorbing component of the present exemplary embodiment is configured by the laminate-bonded body of the low density core layer 10 and metal sheets 5, and therefore has a low density compared to that of a single metal sheet. As a result, an increase in the mass of the laminated metal sheet 9 can be greatly suppressed, even when the thickness of the core layer 10 is increased. This thereby enables a high bending rigidity to be achieved in comparison to a single metal sheet of equivalent weight. As described by Tymoshenko, the maximum load $Pm_i$ during buckling deformation is a function of the bending rigidity of the configuring sheet (see Equation (1)), and the $Pm_i$ is higher the higher the bending rigidity. Thus the $Pm_i$ can be raised by using an effect of increasing the rigidity of the laminated metal sheet 9.

$$Pm_i = k \, \pi^2 D/b^2 \qquad\qquad \text{Equation (1)}$$

Wherein k is a proportionality constant, D is the bending rigidity, b is the width of a side face of the impact absorbing component.

Shortening the wavelength of buckling deformation is achieved by the following mechanism.

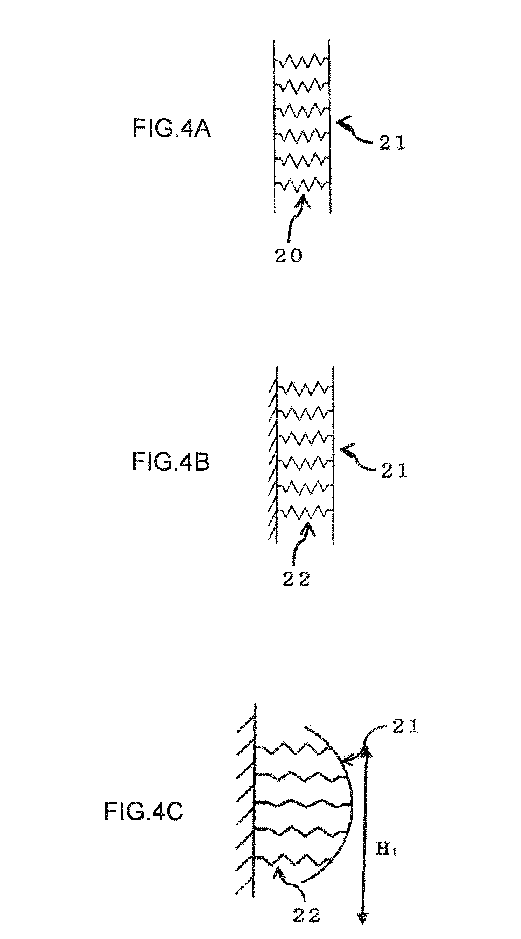

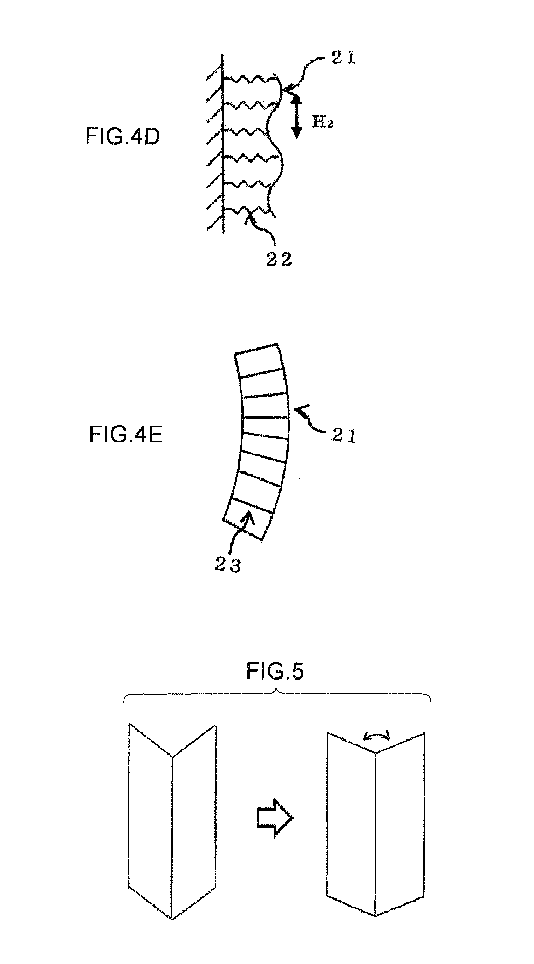

In the laminated metal sheet 9 configuring the impact absorbing component of the present exemplary embodiment, the core layer 10 of low Young's modulus is bonded to and constrains the metal sheets 5 at both faces, enabling modeling as two sheets of surface layer member 21 constraining each other through elastic springs 20 (Fig. 4A). Although there is a difference in the degrees of freedom for deformation of the surface layer members 21, an axial crushing deformation mode of these two sheets is equivalent to a crushing deformation mode of a sheet on an elastic floor (Fig. 4B). An elastic floor 22 is equivalent to the elastic springs 20. In the two sheets of the surface layer member 21 constrained by the elastic springs 20 (Fig. 4A), both of the two sheets (the surface layer member 21) are unfixed, and in the surface layer member 21 on the elastic floor 22 (Fig. 4B) only one of the sheets (the surface layer members 21) is unfixed. However, in both cases, axial crushing energy is absorbed by elongation deformation of the elastic springs 20 and by deformation of the surface layer member 21. Moreover, from the principle of least action, deformation is that having the minimum total deformation energy. As described by Tymoshenko, the energy $e_f$ is at a minimum when the surface layer sheet metal is deformed with a wavelength H1 (Fig. 4C) equivalent to the spacing between ridge lines. However, in deformation of an elastic floor, the energy can be decreased by making the elongation as small as possible. As a result, the energy $e_c$ is minimized when deformed at a wavelength $H_2$ that is shorter than the spacing between ridge lines as illustrated in Fig. 4D. Thus the bucking wavelength of a sheet on the elastic floor 22 is determined by a balance in the magnitudes of $e_c$ and $e_f$, and is a value shorter than $H_1$ but longer than $H_2$ (Fig. 4C, Fig. 4D).

Shortening of the wavelength of the laminated metal sheet 9 configuring the present exemplary embodiment can also be explained under similar principles. Namely, the deformation energy is smaller in the surface layers 5A, 5B when buckled at longer wavelength. The deformation energy is smaller in the core layer 10 when buckled at shorter wavelength. The laminated metal sheet 9 undergoes buckling deformation at a wavelength such that there is a balance in the magnitude relationship between the deformation energies of the surface layers 5A, 5B and of the core layer 10, and such that the sum of the two deformation energies is minimized. The contribution of the deformation of the core layer 10, which tends to have a shorter wavelength, enables crushing deformation with a shorter wavelength to be achieved in the impact absorbing component of the present exemplary embodiment than in an impact absorbing component configured from a single material.

Deformation in which the Young's modulus of the core layer 10 of the laminated metal sheet 9 is that of the surface layers 5A, 5B or higher can be modeled as two sheets of sheet metal constrained by a rigid body. In such cases, the core layer does not undergo elongation deformation (such as that of Fig. 4C, Fig. 4D) and so a constant distance is maintained between the two sheets of surface layer member 21 serving as rigid bodies 23. The deformation energy is minimized for deformation that maintains a flat plane (a cross-section orthogonal to the material axis before deformation is also a cross-section orthogonal to the material axis after deformation) (Fig. 4E). The buckling wavelength cannot be made shorter as a result. The Young's modulus of the core layer 10 of the laminated metal sheet 9 configuring the present exemplary embodiment should accordingly be less than the Young's modulus of the surface layers 5A, 5B.

Moreover, the laminated metal sheet 9 of the present exemplary embodiment should be worked into a profile including at least two ridge lines 3. Corners can be made by configuring the ridge lines 3. Corner portions have greater rigidity than the side face 2, and so are capable of greatly increasing the maximum load $Pm_i$ during buckling deformation. Moreover, there should be two or more of the ridge lines 3. In cases in which there is only one of the ridge lines 3, there is a free end face present at one peripheral end face of each of the side faces on either side of the ridge line 3. As a result, a deformation mode occurs in which the angle formed by the side faces widens under crushing load, as illustrated in Fig. 5. The boundary conditions accordingly change, twisting deformation occurs so that buckling deformation is not stable, and the advantages of the laminated metal sheet described above cannot be sufficiently exhibited.

Due to the above reasons, the impact absorbing component of the present exemplary embodiment is able to achieve buckling deformation that maintains a high maximum load $Pm_i$ during buckling deformation, and is able to increase the number of times of bucking due to the short wavelength, such that a high average load W is achieved. As a result, the impact energy absorption can be increased. Moreover, the boundary conditions do not change during deformation, enabling buckling to be stabilized. As a result impact energy can be efficiently absorbed.

Another effect of buckling deformation with short wavelength is being able to suppress the occurrences of phenomena such as axial deviation during buckling deformation of a single metal sheet (Fig. 6). As a result buckling can be stabilized, and impact energy can be absorbed with good reproducibility. Even when load is simultaneously imparted along a direction intersecting the impact absorption direction at an angle (imparted to the impact absorbing component as a biased load), impact energy can still be stably absorbed.

It is sufficient for the impact absorbing component of the present exemplary embodiment to be configured including a member that is formed into a profile including at least two ridge lines by working the appropriate laminated metal sheet 9 with Young's modulus and density that satisfy the above conditions, and there are no particular limitations to the form of the ridge lines 3. Hence it is sufficient that there are two or more of the ridge lines 3, and these maybe parallel to the impact absorption direction, may be disposed so as to fan out on progression along the impact load exertion direction, or the reverse thereof. The number of the ridge lines 3 is preferably 25 of less. Shaping becomes difficult when the number exceeds 25.

There is also no particular limitation to the profile of the impact absorbing component of the present exemplary embodiment, as long as the above conditions are satisfied. The profile may be that of an impact absorbing component worked into a specific form by applying crush beads to side faces as described in JP-A No. 2006-207724, however this is not an essential condition of the present exemplary embodiment. The profile limitations are accordingly less than those of conventional technology, and a form may be selected according to purpose. For example, when the impact absorbing component is formed by working in a simple process, a rectangular shape such as a simple U-shape or S-shape, or hat shape, may be selected. In order to also use the form to further stabilize the energy absorption for load along an angled direction, the cross-section profile orthogonal to the impact load direction may be formed with a polygonal shape including a large number of ridge lines (exceeding a quadrangle shape), enabling a more isotropic form to be achieved. A hexagonal to octagonal cross-section is more preferable from the perspective of achieving a balance between shaping properties and energy absorption performance to angled load. A profile including at least two ridge lines disposed so as to fan out on progression along the impact load exertion direction is also possible, in a form having different cross-section profiles at end faces. In such profiles, making the cross-section on the side that first receives impact load smaller, decreases $Pm_1$ (whereas normally $Pm_1 > Pm_j$ ($j > 1$)), and is useful in more certainly suppressing propagation of impact load to other members. Conversely, a profile including at least two ridge lines disposed so as to taper along the impact load exertion direction is also possible. In such cases, the cross-section on the side initially receiving the impact load can be made larger, enabling $Pm_1$ to be increased. As a result, suitable application may be made to applications in which an initial impact withstanding force is needed in the component (such as applications in which the component is made difficult to break).

There are, moreover, no particular limitations to the height h of the impact absorbing component of the present exemplary embodiment. The height h of the impact absorbing component refers to the height of the impact absorbing component projected onto the impact absorption direction axis, and where there are many such axes, refers to the effective impact absorbing component height. The impact energy absorption performance per each wave of bucking is determined by the component cross-section and by the configuring material, enabling a preferable component height to be determined according to the component cross-section and the configuring material. For example, the impact energy absorption performance per each wave of bucking is a function of the product of the plastic buckling moment Mp of the configuring laminated sheet, and the maximum peripheral length $L_m$ of the component cross-section. Thus for a target energy absorption amount $U_0$, when the component height h is $\leq (U_0/M_0) L_m$, sometimes impact energy cannot be completely absorbed by the impact absorbing component alone. Thus preferably $h > (U_0/M_0) L_m$, and more preferably $h > 2 \times (U_0/M_0) L_m$. On the other hand, preferably $h \leq (100 \times U_0/M_0) L_m$. When $h > (100 \times U_0/M_0) L_m$, sometimes there are many undamaged locations unaffected by the impact energy, resulting in a lowering of impact absorption performance by mass.

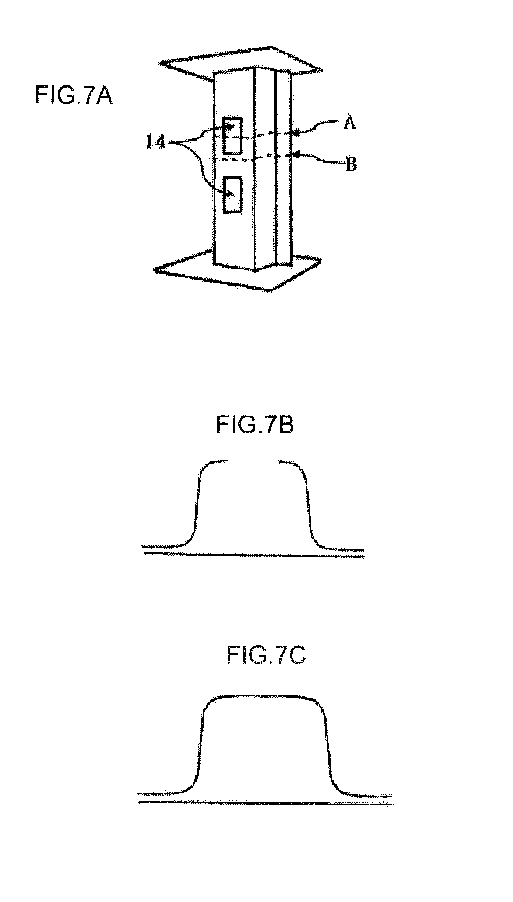

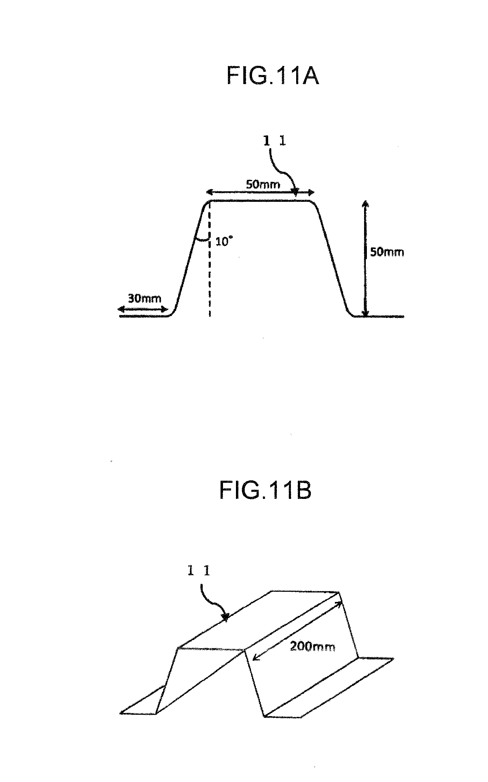

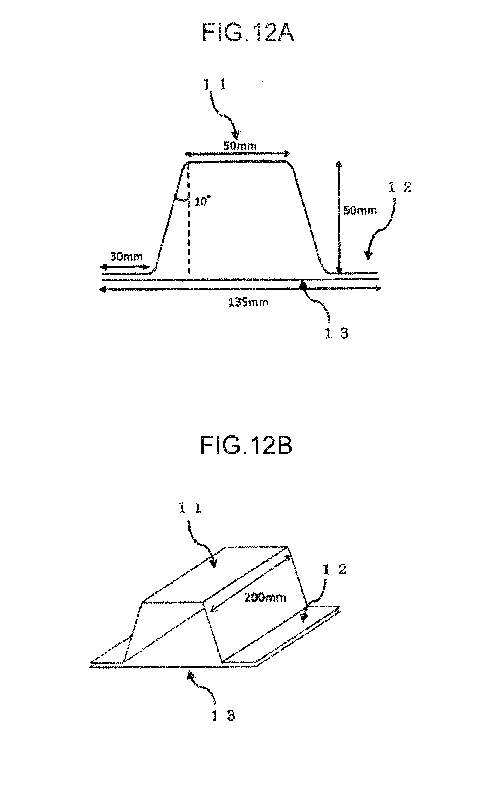

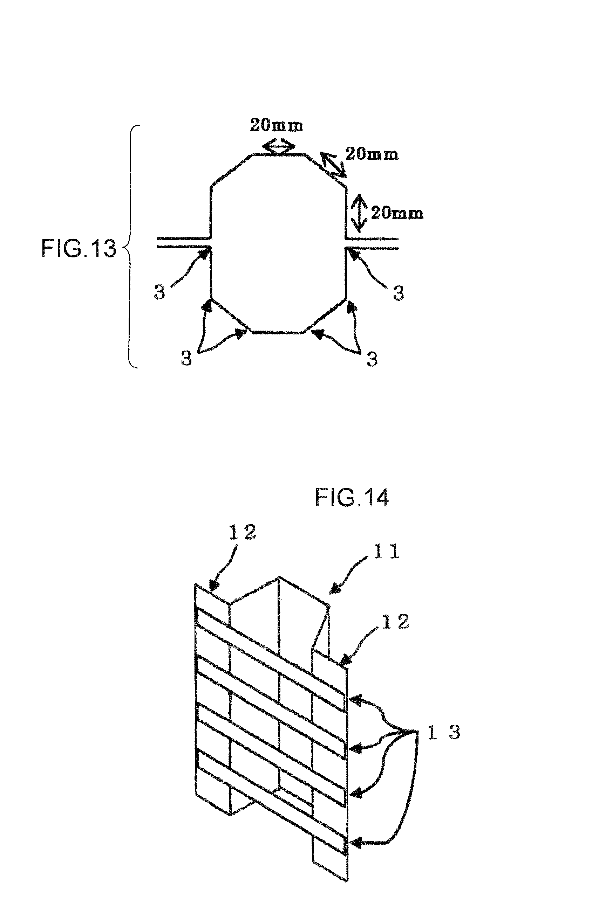

Moreover, the form of the component cross-section of the impact absorbing component of the present exemplary embodiment may be an open cross-section (see Fig. 11A, Fig. 11B), may be a closed cross-section (see Fig. 12A, Fig. 12B), or may be a closed cross-section provided with an open portion in part of the cross-section (see Fig. 14). A form with beads formed to a side face, a form with an open cross-section at a portion where a hole is provided in a side face (Fig. 7A to Fig. 7C), or a form in which a cutout portion is inserted at a collision initiation location, may also be adopted.

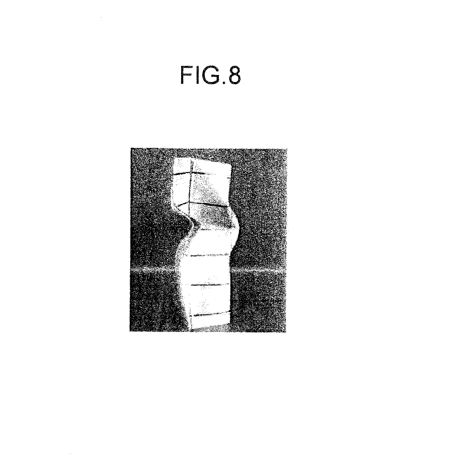

When emphasis is given to low weight properties, after securing two ridge lines, preferably at least one side face (a side face that forms a rear plate in an example described below) is omitted to give a component cross-section that has an open cross-section. The impact absorbing component of the present exemplary embodiment buckles stably with a short wavelength due to configuring with the member that is the appropriate laminated metal sheet 9 formed into a profile including two ridge lines. As a result, although the rear plate is omitted to give an open cross-section as in the example described below, the impact absorbing component does not deform in a "V-shape", but deforms instead in a bellows-shape. However, in cases in which a single metal sheet is formed into a profile including two or more ridge lines, the impact absorbing component buckles with a wavelength $H_1$ equivalent to the spacing between ridge lines. As a result, in cases in which there is an open cross-section, deformation occurs in which free end portions fold in greatly toward the inside as demonstrated by a comparative example described below, "V-shaped" deformation occurs, and the creases of a bellows-shape cannot be formed stably (Fig. 8). As a result, it is difficult to efficiently absorb the impact energy with an open cross-section in cases in which configuration is made using a single metal sheet. Accordingly, one of the features of the present exemplary embodiment is the ability to stably absorb impact energy even with an open cross-section. Another effect from making the component cross-section an open cross-section is that welding is omitted, and the degrees of freedom for joining the component and the vehicle body together are increased (due to adopting an open cross-section, it is possible to fasten with bolts through L-shaped plates or the like).

Moreover, in cases in which emphasis is given to low weight properties and twisting rigidity of the impact absorbing component, the impact absorbing component is preferably configured with a closed cross-section provided with an opening portion in a portion of the component cross-sections, and a partially open cross-section provided with holes in the side face. The twisting rigidity is increased by employing a closed cross-section. The impact absorbing component of the present exemplary embodiment possesses an underlying potential to stably deform in a bellows-shape and absorb energy even with an open cross-section, such that there is no need to give side faces provided with holes the strength needed to suppress "V-shaped deformation". As a result the degrees of freedom for design are greater than in impact absorbing components made from single metal sheets.

When even greater emphasis is given to twisting rigidity and bending rigidity of the impact absorbing component, preferably the entire impact absorbing component has a closed cross-section profile.

Moreover, in the impact absorbing component of the present exemplary embodiment, it is sufficient for the member formed by working the appropriate laminated metal sheet 9 into a profile including at least two ridge lines to configure 50% or more of the peripheral length of the component cross-section having the maximum peripheral length, and there is no need for the configuring material to be entirely the laminated metal sheet 9. It is possible to substitute part thereof with a single metal sheet, according to purpose. For example, in cases in which the impact absorbing component has the hat profile of Fig. 1E, it is possible to substitute a rear plate 13 with a single metal sheet. When laminated metal sheets 9 are welded together, sometimes bonding is lost between the core layer and the surface layer metal sheets due to heat input during welding. As a result, welding conditions must be set such that re-bonding of the metal sheets to the core layer is achieved, and sometimes welding is difficult. Making the rear plate 13 from a single metal sheet eliminates the need for such conditions in the rear plate 13, and enables welding conditions to be set more easily. However, the laminated metal sheet 9 should not be less than 50% of the maximum peripheral length of the component cross-section of the impact absorbing component. When configuring with a combination of the laminated metal sheet 9 with a single metal sheet, buckling creases propagating from the laminated metal sheet 9 to the single metal sheet makes the composite overall wavelength longer. In cases in which the single metal sheet exceeds 50%, deformation with the composite buckling wavelength becomes the predominant deformation during buckling, leading to a reduction in the energy absorption efficiency. It is preferable to make the influence from the composite buckling wavelength small, and so the proportion of the peripheral cross-section length that is occupied by the laminated metal sheet 9 is preferably 70%, and is more preferably 85% or greater.

The Young's modulus ratio ($E_c/E_f$) of the core layer 10 to the surface layers 5A, 5B of the laminated metal sheet 9 is preferably from 1/10 to 1/100000, and the Young's modulus ratio ($E_c/E_f$) is more preferably from 1/10 to 1/1000. The reason for this is explained below.

If the $E_c/E_f$ exceeds 1/10, it can be presumed that the Young's modulus ($E_c$) of the core layer 10 is too large, the core layer 10 does not readily undergo shear deformation, and buckling deformation occurs with a wavelength slightly shorter than that with a single material. There is accordingly a possibility that the impact energy absorption efficiency is not greatly raised in an impact absorbing component configured from a material formed by working the laminated metal sheet 9 with the Young's modulus ratio described above.

Moreover, when the $E_c/E_f$ is less than 1/100000, the Young's modulus $E_c$ of the core layer 10 is extremely small, and so the core layer 10 is readily deformed. The deformation energy of the core layer 10 when this occurs is accordingly a small deformation energy even when the deformation amount is large, due to the $E_c$ being small. As a result, the deformation energy of the core layer 10 can be substantially negligible within the total of the deformation energies of the surface layers 5A, 5B and the core layer 10, and so deformation is liable to occur that makes the deformation energy of the surface layers 5A, 5B small. Namely, can be presumed that in cases in which the $E_c/E_f$ is less than 1/100000, the laminated metal sheet 9 undergoes buckling deformation with a wavelength slightly shorter than that of a single material. There is accordingly a possibility that the impact energy absorption efficiency is not greatly raised in an impact absorbing component configured from a material formed by working the laminated metal sheet 9 with the Young's modulus ratio described above.

Moreover, in cases in which the $E_c/E_f$ is less than 1/1000, sometimes the impact absorbing component 1 configured from the member formed by working the laminated metal sheet 9 has a maximum load $Pm_i$ during bucking that is smaller due to a decrease in the $E_c$ even when the bucking wavelength is short. As a result, sometimes the average load W is reduced.

In consideration of the above, the Young's modulus ratio ($E_c/E_f$) of the core layer 10 to the surface layers 5A, 5B of the laminated metal sheet 9 is preferably from 1/10 to 1/100000, and the Young's modulus ratio ($E_c/E_f$) is more preferably from 1/10 to 1/1000.

The separation between the ridge lines 3 of the member formed from the laminated metal sheet 9 is preferably 10 mm or greater. When the Young's modulus of the core layer 10 is within the above range, there is a possibility that the bucking wavelength is particularly short due to the above reasons, and is often 10 mm or less. Thus even if the separation between the ridge lines 3 is 10 mm or above, the bucking wavelength of the impact absorbing component 1 can still be made 10 mm or smaller. This is more readily implemented when the Young's modulus ratio ($E_c/E_f$) of the core layer 10 to the surface layers 5A, 5B of the laminated metal sheet 9 is from 1/10 to 1/100000. Working during manufacture of the impact absorbing component is easier if the separation between the two ridge lines can be made large. However, when configured from a single metal sheet, the bucking wavelength is equivalent to the separation between the two ridge lines. Thus in order to make the bucking wavelength less than 10 mm, the separation between the two ridge lines needs to be made less than 10 mm. Another feature of the present exemplary embodiment is the ability to reduce the limitations to the profile by configuring with the appropriate laminated metal sheet 9.

The sheet thickness ratio ($t_c/t_f$) of the sheet thickness ($t_c$) of the core layer 10 to the sheet thickness ($t_f$) of the surface layers 5A, 5B of the laminated metal sheet 9 configuring the impact absorbing component of the present exemplary embodiment is preferably 10.0 or less. Although it is slightly different depending from the specific weights of the surface layers 5A, 5B and the core layer 10 configuring the laminated metal sheet 9, in consideration of low weight properties of the laminated metal sheet 9, the $t_c/t_f$ is preferably 2.0 or greater, and is more preferably 3.5 or greater.

In cases in which the sheet thickness ratio ($t_c/t_f$) exceeds 10.0, a large divergence arises between the rigidity of the laminated metal sheet 9 and the rigidity of the surface layers 5A, 5B due to the core layer 10 becoming extremely thick compared to the surface layers 5A, 5B. As a result, there is a tendency for symmetrical deformation to occur between the surface layers 5A, 5B during buckling deformation.

More specifically, when the sheet thickness ratio ($t_c/t_f$) is less than 10.0, the relative difference between the rigidity of the laminated metal sheet 9 and the rigidity of the surface layers 5A, 5B is comparatively small. Thus the laminated metal sheet 9 deforms by bending in a similar manner to a sheet of a single material. Namely, the surface layers 5A, 5B undergo asymmetric bending deformation due to surface layer 5A deforming by bending toward the outside, while the surface layer 5B deforms by bending toward the core layer 10.

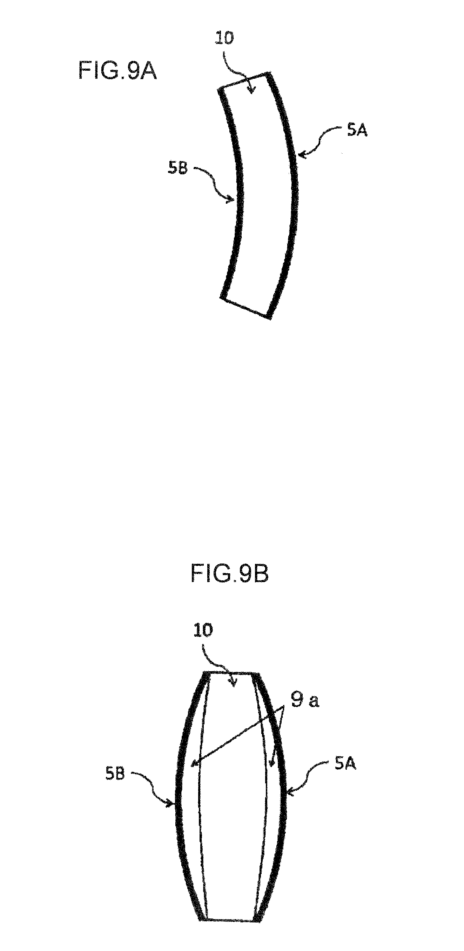

When the sheet thickness ratio ($t_c/t_f$) exceeds 10.0, as illustrated in Fig. 9B, the surface layer 5A deforms by bending toward the outside, while the surface layer 5B also deforms by bending toward the outside. As a result, deformation occurs such that the laminated metal sheet 9 bulges in the sheet thickness direction (opens out like a paper lantern), and a delaminated portion 9a arises between the surface layers 5A, 5B and the core layer 10. Thus there is a possibility that a stable bellows-shaped crushing deformation is not obtained in cases in which impact load is exerted in the height direction on the impact absorbing component configured by working the laminated metal sheet 9.

When the sheet thickness ratio ($t_c/t_f$) is less than 2.0, the proportion occupied by the thickness of the surface layers 5A, 5B to the thickness of the laminated metal sheet 9 is 50% or greater. Due to the surface layers 5A, 5B having a large specific weight compared to the core layer 10, the mass of the laminated metal sheet 9 is greatly increased. As a result there is a possibility that sufficient weight reduction is not achieved in the impact absorbing component configured from the laminated metal sheet 9.

In consideration of the above, the sheet thickness ratio ($t_c/t_f$) of the core layer 10 to the surface layers 5A, 5B of the laminated metal sheet 9 configuring the impact absorbing component of the present exemplary embodiment is preferably 10.0 or less, more preferably 7.0 or less, and even more preferably 5.0 or less.

The surface layers 5A, 5B according to the present exemplary embodiment are not particularly limited, and metal sheets of carbon steel, aluminum, titanium, copper, magnesium, alloys thereof, and the like may be employed therefor. Specific examples of steel sheets that may be employed include: steel sheet used for cans, such as tin plate, thin tin-plated steel sheet, chromate electroplated steel sheet (tin-free steel), nickel-plated steel sheet; hot-dip galvanized steel sheet, such as hot-dip zinc galvanized steel sheet, hot-dip zinc-iron alloy steel sheet, hot-dip zinc-aluminum-magnesium alloy plated steel sheet, hot-dip aluminum-silicon alloy plated steel sheet, and hot-dip lead-tin alloy plated steel sheet; a surface treated steel sheet such as an electroplated steel sheet, such as zinc electroplated steel sheet, zinc-nickel electroplated steel sheet, zinc-iron alloy electroplated steel sheet, or zinc-chrome alloy electroplated steel sheet; cold rolled steel sheet; hot rolled steel sheet; and stainless steel sheet.

Moreover, the core layer 10 may be laminated between surface layers 5A, 5B formed from metal sheets that are metal sheets of a similar type, but are different substances having similar Young's moduli to each other. More specifically, in applications where, for example, bending or drawing is required, it is possible to, for example, laminate the core layer 10 between steel sheets of different strength, using the softer steel on the face where the radius of curvature is small and severe working occurs, and using high strength steel on the other face to secure strength. In cases in which the surface layers 5A, 5B are two metal sheets having different Young's moduli from each other, the value of the surface layer having the smaller Young's modulus is employed as $E_f$ of the Young's modulus ratio ($E_c/E_f$) as defined in the present specification.

A known surface treatment may be applied to the surfaces of the surface layers 5A, 5B according to the present exemplary embodiment in order to raise adhesiveness and corrosion resistance. Examples of such surface treatment include chromate treatment (reaction-type, coating-type, or electrolytic) and non-chromium treatment, phosphate treatment, and organic resin treatment, however, there is no limitation thereto.

The thickness of the surface layers 5A, 5B is preferably 0.2 mm or greater. In cases in which the thickness of the surface layers 5A, 5B is less than 0.2 mm, the surface layers 5A, 5B are liable to fracture during bend-working when manufacturing the impact absorbing component, and sometimes the desired cross-section profile is not obtainable. However, the weight reduction effect is liable to be insufficient in cases in which the thickness of the surface layers 5A, 5B exceeds 2.0 mm. The thickness of the surface layers 5A, 5B is preferably 2.0 mm or less from the perspective of weight reduction.

The thickness of the surface layers 5A, 5B that is lamination bonded above and below the core layer 10 may be different above and below. For example, it is possible to make the surface layer in which tensile deformation occurs thicker in order to prevent fracture of the surface layers 5A, 5B during the bending referred to above. However, in cases in which the thicknesses of the surface layers 5A, 5B are modified, the thickness ratio ($T_L/T_S$) of the thickness ($T_L$) of the thicker surface layer to the thickness ($T_S$) of the other surface layer is preferably from 1 to 1.5. This is because in cases in which the thickness ratio ($T_L/T_S$) of the thickness ($T_L$) of the thicker surface layer to the thickness ($T_S$) of the other surface layer exceeds 1.5, not only does this tend to increase the weight of the laminated metal sheet 9 by a large amount, but there is also a possibility that the impact absorbing component configured by working the laminated metal sheet 9 is unable to obtain stable bellows-shaped crushing deformation.

In cases in which the thicknesses of the surface layers 5A, 5B placed above and below the core layer 10 are different above and below, preferably the thickness ($T_L$) of the thicker surface layer is employed as the thickness ($t_f$) referred to above in the sheet thickness ratio ($t_c/t_f$) of the core layer 10 to the surface layers 5A, 5B.

Explanation next follows regarding the core layer 10 of the laminated metal sheet 9 according to the present exemplary embodiment. There are no particular limitations to the core layer 10 as long as it is a sheet shaped layer having a Young's modulus of less than the Young's modulus ($E_f$) of the surface layers 5A, 5B, and appropriate selection can be made from known materials. More specifically, examples of substances which may be employed as the material of the core layer 10 include metals such as an A1 alloy, titanium, or copper, and non-metallic materials such as a ceramic, resin, fiber reinforced resin, or paper.

Further examples of the core layer 10 include the above materials and Fe alloys, stainless steel and the like that have been imparted with a known structure, for example a structure including holes such as a mesh structure, a honeycomb structure, or an expanded structure, a wavy structure, a corrugated structure, a roll structure, and a foamed body.

Examples of the core layer 10 also include a composite core layer of a combination of two or more of the above materials, for example a composite material in which the holes of a honeycomb structure are filled with a foamed resin, or a composite material in which a resin sheet and a net structure are laminated together in sequence. In cases in which the core layer 10 is a composite material from a combination of two or more of the above materials, the Young's modulus of the composite body is employed as the Young's modulus ($E_c$) of the core layer 10.

When an insulating material such as a resin is employed as the core layer 10, it is possible to secure the electrical conductively required to secure weldability by including in the resin an aluminum powder, an aluminum alloy powder, a nickel powder, a zinc powder, or an Fe-based metal power (such as Fe-Si alloy, Fe-Cr alloy, Fe-Co alloy, Fe-Mn, or the like), and non-oxide ceramic particles such as boride, carbide, nitride, and silicide particles having an electrical resistivity of from $1.0 \times 10^{-7}$ to $1.9 \times 10^{-4}$ $\Omega\cdot$cm.

Explanation next follows regarding bonding between the surface layers 5A, 5B and the core layer 10 in the present exemplary embodiment. There are no particular limitations to the bonding material and the bonding method, and a known bonding material and bonding method may be employed. For example, adhesive, electro conductive adhesive, or brazing filler metal may be employed as the bonding material, described in detail later, and adhesive bonding, brazing, or welding may be employed as the bonding method.

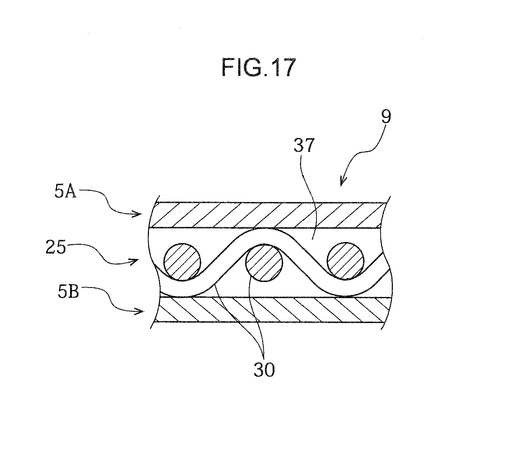

In the laminated metal sheet 9, a wire mesh 30 may be disposed between metal sheets (the surface layers 5A, 5B), with the gaps filled with an adhesive 37 (see Fig. 17). In other words, the core layer 10 may be configured by the wire mesh 30 and the adhesive 37. Examples of the adhesive 37 include a polyester resin and an electro conductive adhesive. The wire mesh 30 is configured with a periodicity, and so the laminated metal sheet 9 may be considered as having a uniform cross-section. There is no limitation to the periodicity being constant, and it may vary.

The surface layers 5A, 5B and the core layer 10 of the laminated metal sheet 9 configuring the impact absorbing component of the present exemplary embodiment preferably are bonded with a shear bond strength of 5 MPa or greater, and more preferably of 25 MPa or greater. Reference here to shear bond strength indicates a value of the maximum load when the surface layers 5A, 5B and the core layer 10 are separated, divided by the bonded surface area.

In cases in which the shear bond strength between the surface layers 5A, 5B and the core layer 10 of the laminated metal sheet 9 configuring the impact absorbing component of the present exemplary embodiment is less than 5 MPa, delamination of the surface layers 5A, 5B on the two faces of the core layer 10 occurs when an impact load is exerted, with a concern that the laminated metal sheet 9 cannot be deformed as a unit. There is, as a result, the possibility that the impact absorbing component is not able to obtain a stable bellows-shaped crushing deformation.

Moreover, the shear bond strength is preferably 25 MPa or greater in order to prevent delamination between the surface layers 5A, 5B and the two faces of the core layer 10 occurign due to shear forces arising in the laminated metal sheet 9 during crushing deformation of the impact absorbing component. The shear bond strength may be evaluated by tensile shear testing according to JIS-K6850.

The bonding layers of the core layer 10 to the surface layers 5A, 5B of the laminated metal sheet 9 configuring the impact absorbing component of the present exemplary embodiment are, for example, preferably bonding through bonding layers 7A, 7B. The bonding layers 7A, 7B may be formed by a known bonding material, and may, for example, be formed from an adhesive, brazing filler metal, or electro conductive adhesive.

Examples of brazing filler metals include soft braze (solder) made from an alloy of lead, tin, antimony, cadmium, zinc, or the like, or a hard braze such as Ni-Cr based brazing filler metals, copper brazing, gold brazing, palladium brazing, silver brazing, and aluminum brazing.

Examples of the electro conductive adhesive include a metal powder such as an aluminum powder, a nickel powder, or an iron power added at a specific amount to an adhesive, as described below. Moreover, electrical resistivity of the electro conductive adhesive is preferably from $1.0 \times 10^{-3}$ to $1.0 \times 10^{-4} \, \Omega \cdot$cm in order to be able to give stable welding.

The bonding layers between the surface layers 5A, 5B and the core layer 10 in the laminated metal sheet 9 may be achieved by brazing filler metal or electro conductive adhesive, thereby enabling weldabilty of the laminated metal sheet 9 to be secured when the core layer 10 is an electro conductive material, and enabling the impact absorbing component to be manufactured by a method such a welding.

Moreover, the shear strength as the bonding portion between the surface layers 5A, 5B and the core layer 10 of the laminated metal sheet 9 is preferably 5 MPa or greater, and is more preferably 25 MPa or greater. Failure (pseudo delamination) occurs at the bonding portion due to shear force when the shear strength of the bonding portion is less than 5 MPa. There is, as a result, the possibility that stable bellows-shaped crushing deformation may not be achieved in the impact absorbing component. Moreover, the shear strength of the bonding portion is more preferably 25 MPa or higher in order to prevent pseudo delamination of the bonding portion from occurring due to shear force in the laminated metal sheet 9 during crushing deformation of the impact absorbing component.

An adhesive is employed as the bonding material in cases in which adhesive bonding is performed to bond the surface layers 5A, 5B and the core layer 10 together, however, in order to maintain heat resistant profile stability even after working, the storage modulus G' of the adhesive at from 100°C to 160°C is preferably from 0.05 MPa to 100 GPa. At less than 0.05 MPa, sometimes creep deformation at the bonding portion, failure of the bonding portion, or delamination originating at the bonding portion occurs when the component formed from the laminated metal sheet 9 is heated to the given temperature (from 100°C to 160°C) due to residual stress at the surface layer/adhesive boundary generated when the laminated metal sheet 9 forms the impact absorbing component. G' is more preferably 1.0 MPa or greater, and is even more preferably 5 MPa or greater in order to prevent creep deformation occurring at the bonding portion with certainty. However, when 100 GPa is exceeded, the G' at normal temperature is greater, and so there is a concern regarding a drop in following ability during working, failure during working, and the ease with which delamination originating at the bonding portion occurs. The storage modulus G' of the adhesive may be evaluated as the maximum value of the storage modulus of the adhesive measured at a frequency of from 0.1 to 10 Hz. When a thermoset adhesive is employed, a cross-linked adhesive film may be employed that has been imparted with a thermal history matching the lamination conditions, and when a thermoplastic adhesive is employed, an adhesive film may be formed, and then measurements may be made using a known dynamic viscosity measurement device.

Moreover, as the tan $\delta$ ratio of the loss modulus G" to the storage modulus G' of the adhesive at from 100°C to 160°C (= G"/G'), it is preferable that tan $\delta$ < 1, and more preferable that tan $\delta$ < 0.8, more preferable that tan $\delta$ < 0.5, and still more preferable that tan $\delta$ < 0.1. The smaller tan $\delta$, the better creep deformation of the bonding portion due to residual stress being suppressed even when heated, enabling the profile to be stabilized. When tan $\delta \geq 1$, viscous flow occurs at the bonding portion when the work piece is heated to from 100°C to 160°C, with the profile becoming unstable, and the possibility arising of creep deformation failure and delamination.

For example, an epoxy-based adhesive, an acrylic-based adhesive, a urethane-based adhesive, or the like may be employed as the adhesive. A structural adhesive having an epoxy resin as a basic member is preferably employed from the perspective of securing both heat resistance and durability of the adhesive, and out of such adhesives a single liquid thermoset adhesive premixed with a setting agent is more preferable from the perspective of ease of handling.

Bonding between the surface layers 5A, 5B and the core layer 10 may be performed by welding in cases in which the core layer 10 is an electro conductive material. A known welding method may be employed, however, specific examples of the welding method include resistance welding such as spot welding or seam welding, electron beam welding, laser welding, and arc welding.

Moreover, as the method of bonding the surface layers 5A, 5B and the core layer 10 together, from the perspectives of securing productivity and weldabilty of the laminated metal sheet 9, bonding with a brazing filler metal with a melting point of 400°C or less (for example, solder), or bonding by using a heat resistant electro conductive adhesive, are particularly preferable.

Explanation next follows regarding a method of manufacturing the impact absorbing component according to the present exemplary embodiment. The impact absorbing component may be manufactured using a known method, and there is no limitation to a specific manufacturing method. For example, the impact absorbing component may be manufactured by performing one or plural processes on the laminated metal sheet 9 of working by press bending, drawing, or roll forming.

Moreover, there is no limitation to a specific bonding method for bonding sheets together when manufacturing the impact absorbing component using two or more sheets, and the manufacture may employ a known bonding method. For example, the sheets may be bonded together using resistance welding such as spot welding or seam welding, welding such as electron beam welding, laser welding, or arc welding, mechanical bonding using bolts or the like, bonding using an adhesive, or brazing using brazing filler metal, to bond the impact absorbing component.

A detailed explanation has been given above regarding configurations of the laminated metal sheet 9 according to the present exemplary embodiment, and detailed explanation next follows regarding a manufacturing method of the laminated metal sheet 9 configured as described above.

The laminated metal sheet 9 according to the present exemplary embodiment may be manufactured by application of a known laminating method. More specifically, manufacture can be performed using the following processes and the like.

Both faces of the core layer 10 are coated in a bonding material (adhesive, brazing filler metal, or the like) if required, the surface layer 5A, the core layer 10, and the surface layer 5B are stacked together in sequence, and then pressed at room temperature or while heating. It is also possible to manufacture by coating one face of each of the surface layers 5A, 5B with adhesive, inserting the core layer 10 in a stack between the two coated faces, and then pressing at room temperature or while heating.

Specific examples of the bonding material and bonding method have been given above, and so detailed explanation thereof will be omitted here.

In the present exemplary embodiment there are at least two of the ridge lines 3, and so the side face 2 (without a free end) is supported at both ends by the ridge lines 3, enabling stable buckling to be achieved under impact load. Moreover, the impact absorbing component is configured from a member that is formed from the laminated metal sheet 9 in which the core layer 10 having suitable Young's modulus and density is laminated between the surface layers 5A, 5B. This thereby enables the sheet to be made thick while maintaining low weight properties. This thereby enables the bending rigidity to be increased. Moreover, due to working so as to include the ridge lines, a corner portion of high rigidity can be obtained. As a result, a high maximum load $Pm_i$ during buckling deformation can be achieved. Moreover, the laminated metal sheet 9 described above undergoes buckling deformation equivalent to that of two metal sheets constrained by elastic springs. This thereby enables buckling deformation with a shorter wavelength than with a single metal sheet as hitherto, enabling the number of bucking deformation times n to be increased. Moreover, due to being able to achieve bucking with a short wavelength, axial deviation is small during deformation, enabling efficient energy absorption even for an impact load input at an angle with respect to the impact absorption direction.

The impact absorbing component of the present exemplary embodiment has the features described above, and so there are comparatively few profile limitations in order to exhibit the functionality. An appropriate form may be selected according to purpose. Specific examples include achieving a weight reduction with an open cross-section as the component cross-section, securing weight reduction and twisting rigidity by providing openings in a side face, and securing bending and twisting rigidity by employing a closed cross-section.

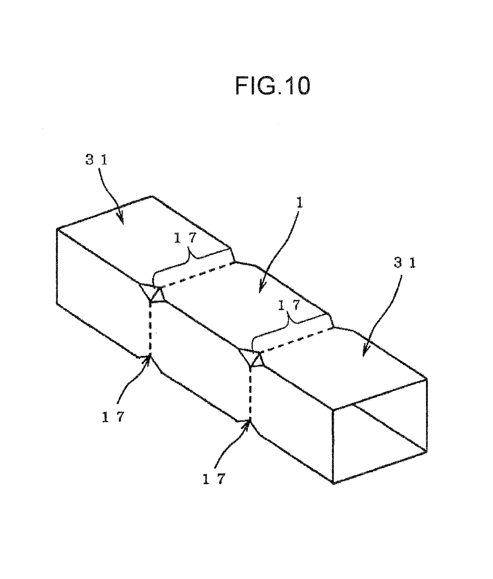

An example of an application of the impact absorbing component of the present exemplary embodiment is to a hollow, elongated framework member (for example a front side member in a vehicle). For example, as illustrated in Fig. 10, an elongated framework member is formed by welding or adhesive bonding impact absorbing components 31 made from sheet metal to the impact absorbing component 1 of the present exemplary embodiment, and by disposing the impact absorbing component 1 of the present exemplary embodiment between plural bucking inducing portions (beads 17) (the region demarcated by dashed lines in Fig. 10). In the elongated framework member, the impact absorbing component of the present exemplary embodiment undergoes stable bellows-shaped crushing deformation when impact load is exerted along the length direction of the framework member, enabling a sufficient impact absorbing effect to be obtained.

Due to such characteristics, the impact absorbing component of the present exemplary embodiment is not only useable in ordinary vehicles, but can also be suitably employed as an impact absorbing component for transport vehicles such as general vehicles ranging from light vehicles to heavy vehicles such as trucks and buses, and trains.

Although explanation has been given above regarding suitable exemplary embodiments of the present invention, while referring to the appended drawings, the present invention is obviously not limited to these examples. It would be clear to a person of ordinary skill in the art that various modifications and improvements are obtainable within the range recited in the scope of the claims, and obviously it should be understood that such modifications and improvements fall within the technical scope of the present invention.

First Examples

Explanation regarding the invention follows, based on specific examples and comparative examples.

Configuration of Employed Laminated Metal Sheet and Manufacturing Method

Laminated metal sheets configured with the surface layers and the core layers listed in Table 1 were manufactured as examples and comparative examples of the present invention. Bonding between the surface layers and the core layer was achieved using a structural adhesive (base: epoxy resin, coating amount 200 g/m$^2$), an instant adhesive (base: cyanoacrylate, coating amount 200 g/m$^2$), brazing filler metal (Sn-Pb based low temperature braze, melting point 183°C, usage amount 15 g/m$^2$).

Table 1

| Laminated Metal Sheet | Surface Layers | | Core Layer | | Configuration of Laminated Metal Sheet | |
|---|---|---|---|---|---|---|
| | Substance | Thickness (mm) | Substance | Thickness (mm) | $E_c/E_f$ | $t_c/t_f$ |
| A | A1 Killed Steel | 0.3 | Wire Mesh | 1.4 | $5.5 \times 10^{-2}$ | 4.7 |
| B | A1 Sheet | 0.3 | Polyester | 1.4 | $5.5 \times 10^{-2}$ | 4.7 |
| C | A1 Killed Steel | 0.3 | Polypropylene | 1.4 | $3.2 \times 10^{-3}$ | 4.7 |
| D | A1 Killed Steel | 0.3 | Wire Mesh | 3.1 | $5.5 \times 10^{-2}$ | 10.4 |
| E | A1 Killed Steel | 0.3 | Wire Mesh | 1.4 | $5.5 \times 10^{-2}$ | 4.7 |
| F | A1 Killed Steel | 0.3 | Wire Mesh | 1.4 | $5.5 \times 10^{-2}$ | 4.7 |
| G | A1 Killed Steel | 0.3 | Foamed PolyUrethane | 1.4 | $5.5 \times 10^{-4}$ | 4.7 |
| H | A1 Killed Steel | 0.3 | Cold Rolled Steel Sheet | 1.4 | 1.0 | 4.7 |
| I | A1 Killed Steel | 0.3 | Wire Mesh | 1.4 | $5.5 \times 10^{-2}$ | 4.7 |
| J | A1 Killed Steel | 0.3 | 50 Times Expanded Polystyrene Foam | 1.4 | $4.3 \times 10^{-5}$ | 4.7 |
| K | A1 Killed Steel | 0.3 | Polyester with A1 Powder Additive | 1.4 | $4.0 \times 10^{-2}$ | 4.7 |

The laminated metal sheets A to D, Q H, J employed a structural adhesive as the bonding material. The bonding material, a core layer, the bonding material, and a surface layer were stacked in sequence onto a surface layer, and then heated to 180°C under a vacuum. The stacked surface layers, bonding material, and core layer were then heated and pressed at a press force of from 10 to 40 kgf/cm$^2$ (from 0.98 to 3.92 MPa) for 20 minutes, and then cooled to room temperature and opened to the atmosphere so as to obtain each of the laminated metal sheets listed in Table 1.
The laminated metal sheet E employed an instant adhesive as the bonding material, and the stacked surface layers, the bonding material, and core layer were pressed at a press force of from 10 to 40 kgf/cm$^2$ without heating so

as to obtain the laminated metal sheet E.

The laminated metal sheet F employed brazing filler metal as the bonding material. The stacked surface layers, bonding material, and core layer were heated to 300°C, heat-pressing was performed at a press force of from 10 to 40 kgf/cm² for 20 minutes, followed by cooling to room temperature, and opening to the atmosphere so as to obtain the laminated metal sheet F.

The laminated metal sheet I employed an adhesive in which A1 powder was added to a structural adhesive such that the electrical resistivity was $0.5 \times 10^{-3}$ Ω·cm as the bonding material. The bonding material, core layer, the bonding material, and a surface layer were stacked in sequence onto the other surface layer, and heated to 180°C under a vacuum. The stacked surface layers, bonding material, and core layer were then heated and pressed at a press force of from 10 to 40 kgf/cm² (from 0.98 MPa to 3.92 MPa) for 20 minutes, then cooled to room temperature, and opened to the atmosphere so as to obtain the laminated metal sheet.

The laminated metal sheet K employed a polyester resin in which A1 powder was added such that the electrical resistivity was $0.5 \times 10^{-3}$ Ω·cm in the core layer, and employed an adhesive in which A1 powder was added to a structural adhesive such that the electrical resistivity was $0.5 \times 10^{-3}$ Ω·cm as the bonding material. The bonding material, core layer, bonding material, and a surface layer were stacked in sequence on the other surface layer, and heated to 180°C under a vacuum. The stacked surface layers, bonding material, and core layer were then heated and pressed at a press force of from 10 to 40 kgf/cm² (from 0.98 MPa to 3.92 MPa) for 20 minutes, then cooled to room temperature, and opened to the atmosphere so as to obtain the laminated metal sheet.

A 980 MPa grade high strength steel sheet (sheet thickness: 1.0 mm) was employed as the comparative example.

The wire mesh employed in the core layer had 0.6 mm diameter steel wire as the base wire, with a mesh spacing (inter-wire spacing) of 1.6 mm. The Young's modulus of the resin employed was measured using tensile testing according to ASTM-D638. The shear bond strength of each of the laminated metal sheets was evaluated by tensile shear testing according to JIS-K6850.

Collision Performance Evaluation Testing

The flowing drop test was performed order to demonstrate the effect of the impact absorbing component according to the present invention. The laminated metal sheets configured as per Table 1 were employed, formed by bending using a press brake, so as to produce an impact absorbing component with a hat shaped profile (open cross-section) of length 200 mm, as illustrated in Fig. 11A, Fig. 11B.

Impact absorbing components of Examples 2, 13 and Comparative Example 4 were produced with a closed cross-section structure by spot welding a rear plate 13 made from a laminated metal sheet so as to close off the opening of a hat member 11 of open cross-section structure, through flanges 12 provided to the hat member 11 of open cross-section structure as illustrated in Fig. 12A, Fig. 12B.

In an impact absorbing component of Example 10, the laminated metal sheet F of Table 1 was worked into members so as to have six ridge lines 3 as illustrated in Fig. 13, and the members were bonded together by spot welding, so as to form a polygonal closed cross-section profile.

To produce the impact absorbing component of Example 11 as illustrated in Fig. 14, first a hat shaped profile component was produced with a length of 200 mm as illustrated in Fig. 11A, Fig. 11B. Then the impact absorbing component was produced by attaching rear plates 13 of width 22 mm made from laminated metal sheet by, locally at intervals of 22 mm, spot welding through flanges 12 provided to the hat member 11 such that a portion of transverse cross-section profiles were open cross-section profiles.

In the impact absorbing component of Example 12, the laminated metal sheet I was worked into the hat cross-section profile illustrated in Fig. 11A, Fig. 11B, 590 MPa grade high strength steel (1.0 mm) was spot welded as a rear plate 13 thereto using spot welding, so as to produce the impact absorbing component having a closed cross-section structure as illustrated in Fig. 12A, Fig. 12B.

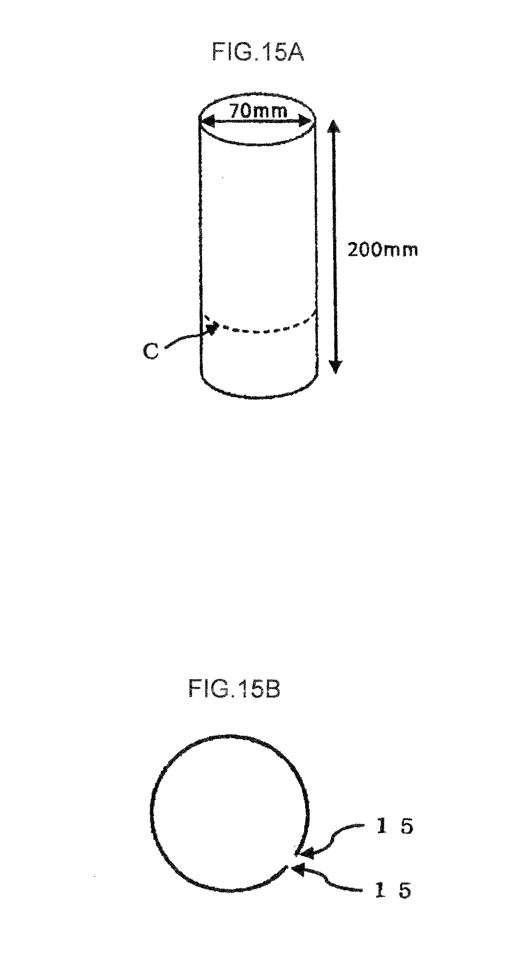

In the impact absorbing component of Comparative Example 2, the laminated metal sheet F of Table 1 was formed into a 70 mm diameter circular tube as illustrated in Fig. 15A, Fig. 15B, and end portions 15 thereof were bonded together by laser welding so as to give a circular cylinder shape.

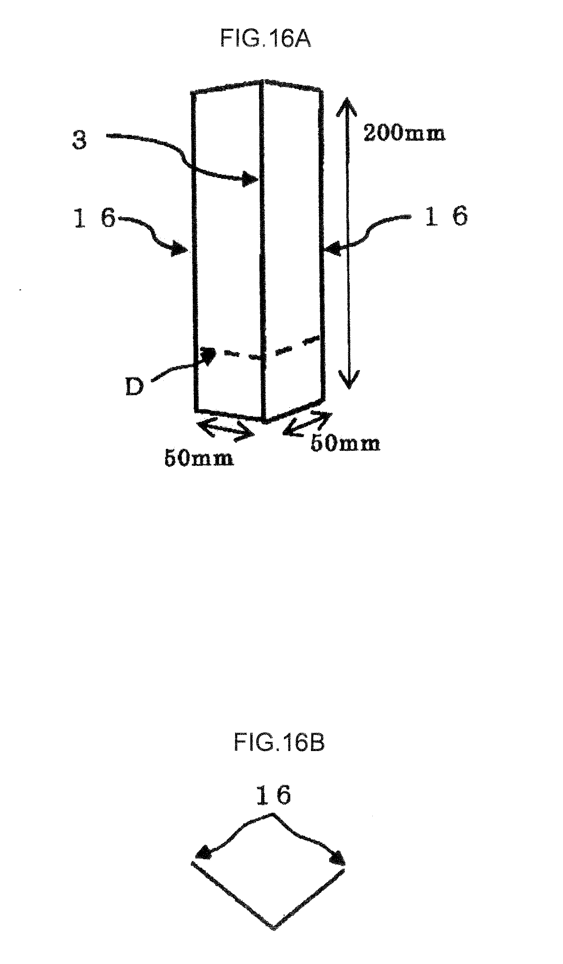

In the impact absorbing component of Comparative Example 3, the laminated metal sheet A of Table 1 was bent to form an L-shaped profile as illustrated in Fig. 16A, Fig. 16B.

The end portion at the opposite side of the impact absorbing components to the end portion a cone collides with were fixed to a jig. The collision end side of the impact absorbing component was then collided with at a speed of 30 km/h along the axial direction by letting the cone of mass 120 kg fall freely thereon from a height of 3.5 m.

For exertion of an angled load, the impact absorbing components were fixed to a base inclined at an angle of 10°, and drop testing performed with a procedure similar to the above.

Evaluation

Collision Performance Evaluation

The impact absorption energy was computed up to crushing of 100 mm from the load-displacement curve during drop testing. In order to evaluate the low weight properties of the components, the mass of the components were divided by the impact absorption energy to give an impact absorption energy per unit mass, and comparative evaluation performed thereon.

The impact absorption energy when angled load was exerted was computed from an angle-corrected load-displacement curve due to the load being exerted at a 10° angle to the axial direction.

Bucking Wavelength and Deformation Form Evaluation

The bucking wavelength was computed from a displacement (amount of penetration of the cone into the impact absorbing component) -load curve during drop testing.

More specifically, measurements are taken of displacement when load starts to rise up to displacement when the load is at a minimum, for each period in which the load rises and falls. The bucking wavelength is then computed for each period by subtracting the displacement when load starts to rise from the displacement when the load is at a minimum. The bucking wavelength is computed similarly for each period, and finally averaged to compute an average bucking wavelength. The average bucking wavelengths were evaluated as the bucking wavelength for the examples of the present invention. The test results are listed in Table 2 and Table 3.

Tabel 2

|  | Material | Impact Absorbing Component Profile | Impact Absorption Energy Per Unit Mass (J/g) | Average Bucking Wavelength (mm) | Deformation Form |
|---|---|---|---|---|---|
| Example 1 | Laminated Metal Sheet A | Open Cross-Section | 10.4 | 8.3 | A |
| Example 2 | Laminated Metal Sheet I | Closed Cross-Section | 8.8 | 9.2 | A |
| Example 3 | Laminated Metal Sheet B | Open Cross-Section | 8.5 | 8.2 | A |
| Example 4 | Laminated Metal Sheet C | Open Cross-Section | 7.7 | 7.1 | A |
| Example 5 | Laminated Metal Sheet D | Open Cross-Section | 7.3 | 8.9 | B |
| Example 6 | Laminated Metal Sheet E | Open Cross-Section | 7.2 | 8.8 | B |
| Example 7 | Laminated Metal Sheet F | Open Cross-Section | 10.1 | 8.2 | A |
| Example 8 | Laminated Metal Sheet G | Open Cross-Section | 7.0 | 6.6 | A |
| Example 9 | Laminated Metal Sheet J | Open Cross-Section | 6.8 | 9.8 | A |
| Example 10 | Laminated Metal Sheet F | Polygonal Profile Closed Cross-Section | 9.5 | 8.0 | A |
| Example 11 | Laminated Metal Sheet I | Partially Open Cross-Section | 9.1 | 9.0 | A |

(continued)

|  | Material | Impact Absorbing Component Profile | Impact Absorption Energy Per Unit Mass (J/g) | Average Bucking Wavelength (mm) | Deformation Form |
|---|---|---|---|---|---|
| Example 12 | Laminated Metal Sheet I + High Strength Steel | Closed Cross-Section | 6.8 | 8.5 | A |
| Example 13 | Laminated Metal Sheet K | Closed Cross-Section | 8.9 | 9 | A |
| Comparative Example 1 | Laminated Metal Sheet H | Open Cross-Section | - | 46.2 | C |
| Comparative Example 2 | Laminated Metal Sheet F | Circular Cylinder | 6.3 | 8.2 | A |
| Comparative Example 3 | Laminated Metal Sheet A | L-Shaped Profile | - | - | C |
| Comparative Example 4 | High Strength Steel | Closed Cross-Section | 6.6 | 45.5 | A |
| Comparative Example 5 | High Strength Steel | Open Cross-Section | - | 47 | C |

Table 3

|  | Axial Load | | Angled Load | |
|---|---|---|---|---|
|  | Impact Absorption Energy Per Unit Mass (J/g) | Average Bucking Wavelength (mm) | Impact Absorption Energy Per Unit Mass (J/g) | Average Bucking Wavelength (mm) |
| Example 1 | 10.4 | 8.3 | 10.1 | 9.8 |
| Example 3 | 8.5 | 8.2 | 6.9 | 8.4 |
| Example 4 | 7.7 | 7.1 | 7.3 | 8.2 |
| Comparative Example 4 | 6.6 | 45.5 | 5.4 | 52.3 |

"A" in the deformation form column of Table 2 indicates that stable bellows-shaped crushing deformation occurred, and "B" indicates that long bucking wavelength occurred at a portion of locations out of the overall crushing deformation of the component. "C" indicates that the component deformed overall by folding into a "V-shape" about the first buckling position where deformation started.

As is apparent from Table 2, the impact absorbing components of Examples 1 to 13 had an impact absorption energy per unit mass of > 6.6, and exhibited high impact energy absorption performance in comparison to the impact absorbing component made from high strength steel of the Comparative Example 4, and excellent low weight properties. Specifically, in a comparison of the Example 1 with the Comparative Example 4, to obtain the same impact absorption energy, a weight reduction in the impact absorbing component of Example 1 of slightly under 40% is possible compared to the Comparative Example 4.

Moreover, it is apparent that the average bucking wavelengths of the impact absorbing components of Examples 1 to 13 ranged from 7.1 mm to 9.8 mm, i.e. all were 10 mm or less, and that these are extremely short average bucking wavelengths compared to those of the impact absorbing components formed from high strength steel of Comparative Examples 4 to 5.

Moreover, as listed in Fig. 3, the amount of impact absorption energy per unit mass and the bucking wavelength when impact load was imparted along the axial direction, and when impact load was imparted along an angled direction, were substantially equivalent to each other. On the other hand, it is apparent that the amount of impact absorption energy and the bucking wavelength differ in the impact absorbing component of the Comparative Example 4 similarly compared as described above. Thus it is apparent that even when the direction of load input is varied somewhat in the exemplary embodiment of the present invention, a high impact absorption performance is realizable due to stable bellows-shaped crushing deformation being achieved with a short bucking wavelength.

Moreover, the impact absorbing components of the Example 2 and the Comparative Example 4 have the same profile as each other but different bucking wavelengths. It is apparent that bucking wavelength of the impact absorbing component of the Comparative Example 4 substantially matches the separation of the ridge lines of the component, and the buckling wavelength depends on the separation of the ridge lines. However, it is apparent that the buckling wavelength of the impact absorbing component of the Example 2 does not match the separation of the ridge lines of the component, and the impact absorbing component configured from the laminated metal sheet has a wavelength that does not depend on the separation of the ridge lines, enabling a shorter bucking wavelength to be achieved.

The impact absorbing components of Examples 1, 3 to 8 all have open cross-section profiles as illustrated in Fig. 11A, Fig. 11B. The impact absorbing component of the Examples 2, 10, 13 all have closed cross-sections as illustrated in Fig. 12A, Fig. 12B and Fig. 13. The impact absorbing component of Example 11 has a partially open cross-section as illustrated in Fig. 14. Stable bellows-shaped crushing deformation was obtained in all of these impact absorbing components. Namely, it is apparent that stable bellows-shaped crushing deformation can be obtained for the impact absorbing components configured from the laminated metal sheets, irrespective of component profile.

It is apparent from a comparing Example 1 and Example 2 with Example 11 that with regards to the amount of impact absorption energy per unit mass, Example 1 (all open cross-section profiles) > Example 11 (a portion of open cross-section profiles) > Example 2 (all closed cross-section profiles). This is thought to be due to the rear plate 13 spot welded through the flanges 12 only having a small contribution to the amount of impact absorption energy, and an effect comparable to the increase in weight being unobtainable as a result of these examples having a partially or completely closed cross-section structure.

The Example 8 has the shortest bucking wavelength in the exemplary embodiment of the present invention, but also has comparatively small impact absorption energy per unit mass. This is thought to be because this example has a small maximum load during the first buckling deformation, and so the average load is also small, such that the amount of impact absorption energy could not be effectively increased.

In the Example 9, the Young's modulus ratio ($E_c/E_f$) of the core layer to the surface layers in the laminated metal sheet configuring the impact absorbing component is less than 1/10000. It hypothesized that this is the reason the bucking wavelength is longer than those of the Examples 1 to 8, 10, 11.

In the Example 5, the sheet thickness ratio ($t_c/t_f$) of the core layer to the surface layers in the laminated metal sheet configuring the impact absorbing component exceeds 10. Thus although excellent energy absorption performance is exhibited, partially unstable crushing deformation occurred due to the surface layers separating as crushing deformation progressed. It is, however, apparent that a favorable deformation mode is exhibited overall for the component.

It is apparent from the measurement results of shear bond strength for the bonding portions that the shear bond strength of the laminated metal sheets configuring the impact absorbing components of Examples 1 to 5, and 7 to 11 exceeded 25 MPa, and that the shear bond strength of the laminated metal sheet configuring the impact absorbing component of Example 6 was 15 MPa. Thus although excellent energy absorption performance was exhibited, unstable crushing deformation occurred over a portion of the component due to the surface layers separating as crushing deformation progressed. It is, however, presumed that a favorable deformation mode is exhibited overall for the component.

The impact absorbing components of Examples 2, 10, 11, 12, 13 were manufactured by bonding the laminated metal sheets together by spot welding. The bonding layers between the surface layers and the core layer of the laminated metal sheet configuring the above impact absorbing components were bonded by brazing filler metal or electro conductive adhesive so excellent conductivity could be secured, enabling the bonding to be performed by spot welding.

In the impact absorbing component of the Example 12, only the rear plate is replaced with a single metal sheet, however it is thought that stable bellows-shaped crushing deformation occurred with a short wavelength similar to other examples due to the laminated metal sheet occupying 60% of the peripheral length of the component cross-section having the maximum peripheral length.

The core layer of the laminated metal sheet configuring the impact absorbing component of Comparative Example 1 has the same Young's modulus as the surface layers. Thus the bucking wavelength is long, similar to that of the impact absorbing component formed from high strength steel in Comparative Example 5, and folding deformation occurs in the component overall originating from the first buckling location where the initial deformation occurs.

The impact absorbing component of the Comparative Example 2 has a smaller impact absorption energy per unit mass than that of the examples. This is thought to be because although the bucking wavelength is short due to the profile of the impact absorbing component being a circular cylinder shape without the presence of ridge lines, since the maximum load is small, the amount of impact energy absorption could not be effectively increased compared to the examples.

In the impact absorbing component of the Comparative Example 3, stable buckling deformation does not occur due to having an L-shaped profile with only one ridge line, and deformation occurs such that the impact absorbing component is twisted by deformation in which the corner spreads out (Fig. 5).

Thus the impact absorbing components formed from the laminated metal sheet configured to satisfy the present invention have excellent low weight performance. Moreover, high impact energy absorption is possible and excellent collision performance is exhibited due to having a high maximum load and stable bellows-shaped crushing deformation at short bucking wavelength, irrespective of the input direction of the impact load.

Second Exemplary Embodiment

Summary

The impact absorbing components according to the present exemplary embodiment are configured from a member formed by working a laminated metal sheet of uniform cross-section configured by lamination bonding surface layers made from a metal sheet having a higher Young's modulus than that of a core layer onto both faces of the core layer, with a sheet thickness ratio ($t_c/t_f$) of the sheet thickness of the core layer ($t_c$) to the sheet thickness of the surface layers ($t_f$) of the laminated metal sheet of from 2.0 to 7.0. Such an impact absorbing component has high impact energy absorption efficiency and is able to achieve a large weight reduction even though it has a simple profile.

Specifically, the bucking wavelength can be made shorter by making the sheet thickness ratio ($t_c/t_f$) of the sheet thickness of the core layer ($t_c$) to the sheet thickness of the surface layers ($t_f$) of the laminated metal sheet from 2.0 to 7.0. Thus the impact absorbing component formed from a laminated metal sheet is able to improve impact energy absorption efficiency.

In the impact absorbing component according to the present exemplary embodiment, the impact energy absorption efficiency can be improved simply by the sheet thickness ratio ($t_c/t_f$) of the sheet thickness of the core layer ($t_c$) to the sheet thickness of the surface layers ($t_f$) of the laminated metal sheet. There is accordingly no need for complicated working of the profile of the impact absorbing component, and the profile can be simplified. Moreover, the impact energy absorption efficiency can be improved without changing the strength of the impact absorbing component since there is no need to change the Young's modulus of the surface layers and the core layer of the laminated metal sheet in order to make the bucking wavelength shorter.

Explanation follows regarding the laminated metal sheet configuring the impact absorbing component, from the perspective of the mechanism that enables the bucking wavelength to be short.

In the laminated metal sheet in which the surface layers are bonded by laminating to both faces of the core layer, the bucking wavelength during buckling deformation is determined so as to minimize the sum of the deformation energy $U_c$ of the core layer and the deformation energy $U_f$ of the surface layers as described above. The deformation energy $U_c$ of the core layer and the deformation energy $U_f$ of the surface layers are expressed by the flowing Equations (2) and (3).

$$U_c = E_c / \, 2.6 \times V_c \times \gamma \qquad \text{Equation (2)}$$

$$U_f = E_f \times V_F \times \varepsilon \qquad \text{Equation (3)}$$

In the Equations (1) and (2) above, $E_c$ represents the Young's modulus of the core layer, $V_c$ represents the volume of the core layer that deforms, and $\gamma$ represents the amount of deformation of the core layer. $E_F$ represents the Young's modulus of the surface layers, $V_F$ represents the volume of the surface layers that deforms, and $\varepsilon$ represents the amount of deformation of the surface layers. Since deformation of the surface layers is bending deformation, and deformation of the core layer is shear deformation, the Young's modulus is divided by 2.6 to give an elasticity modulus for shear deformation.

In cases in which the core layer undergoes shear deformation, as explained with reference to Figs. 4A to 4E in the first exemplary embodiment, basically the deformation energy $U_c$ of the core layer is smaller the shorter the bucking wavelength, and the deformation energy $U_f$ of the surface layers is smaller the longer the bucking wavelength. Thus preferably $U_c \gg U_f$ in order to make the bucking wavelength shorter, and the sum of the deformation energy is dominated by the deformation energy $U_c$ of the core layer.

For example, in cases in which the proportions of the surface layers and the core layer are the same in the laminated metal sheet, the Young's moduli $E_c$ and $E_f$ of the core layer and the surface layer are controlled, and $E_c$ and $E_f$ need to approach each other in order to realize $U_c \gg U_f$. However, since the smaller the difference between $E_c$ and $E_f$, the nearer the deformation behavior during axial crushing deformation of the laminated metal sheet is to that of a metal sheet of a single material, there is the problem that this deviates from the principles described above, and there is a smaller reduction in bucking wavelength. Moreover, often the density of the core layer is raised when $E_c$ is made larger, increasing the mass of the laminated metal sheet. On the other hand, the impact absorbing component is for installation to vehicles or the like in which weight reduction is demanded in order to secure fuel efficiency. Thus such laminated metal sheets are not suitable for configuring the impact absorbing component.

To address this, the laminated metal sheet configuring the impact absorbing component according to the present exemplary embodiment is one that realizes $U_c \gg U_f$ by controlling parameters $V_c$ and $V_f$, which are other parameters that control $U_c$ and $U_f$ in Equations (2) and (3). More specifically, $V_c$ is made large and $V_f$ is made small by increasing the proportion (namely, the sheet thickness) of the core layer in the laminated metal sheet. As a result, in the laminated metal sheet the deformation energy $U_c$ of the core layer can be made larger than the deformation energy $U_f$ of the surface layers. Thus the impact absorbing component according to the present exemplary embodiment is able to make the bucking wavelength shorter during axial crushing.

Configuration of the Impact Absorbing Component

Explanation follows regarding configuration of the impact absorbing component, with reference to Fig. 3 and Figs. 18A and 18B. Fig. 3 is a cross-section illustrating a configuration of the laminated metal sheet 9. The laminated metal sheet 9 is similar to that of the first exemplary embodiment, and so duplicate explanation thereof will be omitted. Fig. 18A is a perspective view illustrating an example of a shape of an impact absorbing component. Fig. 18B is a perspective view illustrating another example of a shape of an impact absorbing component.

The sheet thickness ratio ($t_c/t_f$) of the sheet thickness ($t_c$) of the core layer 10 to the sheet thickness ($t_f$) of the surface layers 5A and 5B of the laminated metal sheet 9 is from 2.0 to 7.0. As verified in the second exemplary embodiment described below, when the value of the sheet thickness ratio ($t_c/t_f$) is a value within such a range, the impact absorbing component according to the present exemplary embodiment is able to achieve a short bucking wavelength.

More specifically, when the sheet thickness ratio ($t_c/t_f$) is less than 2.0, a short bucking wavelength cannot be achieved due to there being only a small contribution from the deformation energy of the core layer 10 to the deformation energy during axial crushing deformation. Moreover, when the sheet thickness ratio ($t_c/t_f$) exceeds 7.0, a large divergence in rigidity occurs between the surface layers 5A, 5B and the core layer 10 due to the core layer 10 being extremely thick compared to the surface layers 5A, 5B. There is accordingly the possibility that the bonding layers 7A, 7B fail in the impact absorbing component, and that stable bellows-shaped axial crushing deformation cannot be achieved.

Moreover, the sheet thickness ratio ($t_c/t_f$) of the sheet thickness ($t_c$) of the core layer 10 to the sheet thickness ($t_f$) of the surface layers surface layers 5A, 5B is preferably from 3.5 to 5.0 in the laminated metal sheet 9. When the value of the sheet thickness ratio ($t_c/t_f$) is within such a range, the impact absorbing component according to the present exemplary embodiment has a shorter bucking wavelength, enabling the stable bellows-shaped axial crushing deformation to occur. More specifically, when the sheet thickness ratio ($t_c/t_f$) is from 3.5 to 5.0, the bucking wavelength can be made even shorter due to excellent balance between the deformation energy of the core layer 10 and the deformation energy of the surface layers 5A, 5B during axial crushing deformation.

Moreover, the Young's modulus ratio ($E_c/E_f$) of the Young's modulus $E_c$ of the core layer 10 to the Young's modulus $E_f$ of the surface layers 5A, 5B may be from 1/10 to 1/1000 in the laminated metal sheet 9. When the Young's modulus ratio ($E_c/E_f$) is a value within this range, the impact absorbing component according to the present exemplary embodiment is able to improve the impact energy absorption efficiency.

More specifically, although the laminated metal sheet 9 is able to make the bucking wavelength of the impact absorbing component smaller when the Young's modulus ratio ($E_c/E_f$) is less than 1/1000, this is unfavorable due to the average load W falling during buckling deformation due to the fall in $E_c$, causing a fall in the impact energy absorption efficiency. Moreover, the Young's modulus $E_c$ of the core layer 10 is larger when the Young's modulus ratio ($E_c/E_f$) exceeds 1/10, and shear deformation does not readily occur. Thus the behavior during axial crushing deformation approaches that of a metal sheet of a single material, and is unfavorable since the bucking wavelength cannot be made shorter. The Young's modulus maybe measured by tensile testing according to ASTM-D638 or the like.

The bonding layers 7A, 7B control shear deformation of the layers formed from the core layer 10 and the bonding layers 7A, 7B, and so preferably have a shear modulus of from 30 MPa to 500 MPa. There is a possibility of the surface layers 5A, 5B deforming independently to each other due to excessive shear deformation of the bonding layers 7A, 7B when the shear modulus is less than 30 MPa, and so this is unfavorable due to stable buckling deformation occurring less readily. When the shear modulus exceeds 500 MPa, shear deformation occurs less readily in the layer formed from the core layer 10 and the bonding layers 7A, 7B, with the possibility that the bucking wavelength becomes longer, and so is unfavorable. The shear modulus referred to above may be measured by tensile shear testing according to JIS-K6850.

Impact Absorbing Component Profile

Explanation next follows regarding the profile of the impact absorbing component according to the present exemplary embodiment. As illustrated in Fig. 18A and Fig. 18B, the impact absorbing components 20A and 20B are, for example, worked into a profile including at least four ridge lines.

More specifically, as illustrated in Fig. 18A, the impact absorbing component 20A may have a hat shaped profile with an open cross-section structure formed by folding a laminated metal sheet from one end in sequence with a valley fold, a mountain fold, a mountain fold, and a valley fold.

As illustrated in Fig. 18B, the impact absorbing component 20B may have a tube shaped profile with a closed cross-section structure formed by folding a laminated metal sheet from one end in sequence with a mountain fold, a mountain fold, a mountain fold, and a mountain fold, and then bonding the end portions together by welding or the like.

In the impact absorbing components 20A and 20B, the ridge line direction is the impact absorption direction.

In the impact absorbing components 20A and 20B, the separation between the ridge lines may be from 50 mm to 80 mm. The separation between the ridge lines is, for example, the separation L illustrated in Fig. 18A and Fig. 18B. When the separation between the ridge lines is within this range, the impact absorbing components 20A and 20B are able to undergo stable bellows-shaped axial crushing deformation with a short bucking wavelength.

More specifically, the profile becomes complicated when the separation between each of the ridge lines is less than 50 mm, and this is unfavorable due to the profile becoming complicated, and due to the profile limitations imposed. The rigidity becomes smaller and there is more of the side face, which undergoes elastic deformation, when the separation between each of the ridge lines exceeds 80 mm, and this is unfavorable due to the bucking wavelength being longer and stable bellows-shaped axial crushing deformation not readily occurring.

The profile of the impact absorbing component according to the present exemplary embodiment is similar to that of the first exemplary embodiment in not being limited to the profiles of the examples given.

As explained above, in the impact absorbing components 20A and 20B according to the present exemplary embodiment, the bucking wavelength is made shorter by making the sheet thickness ratio ($t_c/t_f$) of the sheet thickness ($t_c$) of the core layer 10 to the sheet thickness ($t_f$) of surface layers 5A, 5B of the laminated metal sheet 9 configuring the impact absorbing components 20A and 20B from 2.0 to 7.0, enabling the bending wavelength to be made shorter, and the impact energy absorption efficiency to be improved.

In the impact absorbing components 20A and 20B according to the present exemplary embodiment there is no need for a complicated profile, and the impact energy absorption efficiency can be improved with a simpler profile. Moreover, in the impact absorbing components 20A and 20B there is no need to further lower the Young's modulus ratio between the core layer 10 and the surface layers 5A, 5B of the laminated metal sheet 9 in order to make the bucking wavelength shorter. This thereby enables the impact energy absorption efficiency to be improved without changing the strength of the impact absorbing components 20A and 20B.

Second Examples

Explanation follows regarding second examples of the impact absorbing component according to the present exemplary embodiment.

Manufacture of Laminated Metal Sheet

First laminated metal sheets were manufactured by lamination bonding together the surface layers and the core layers as listed in Table 3. The bonding materials listed in Table 4 were employed to bond the surface layers and the core layer together. The bonding material, core layer, bonding material, and one surface layer were stacked in sequence on the other surface layer and then heated to from 80°C to 180°C, and heated and pressed at a press force of 40 kgf/cm$^2$ (3.92 MPa) for from 20 to 30 minutes, and then cooled to room temperature and opened to the atmosphere so as to manufacture the laminated metal sheets according to each of the examples and each of the comparative examples.

Table 4

| | Surface Layer | | Core Layer | | Bonding Material | | Configuration of Laminated Metal Sheet | |
|---|---|---|---|---|---|---|---|---|
| | Substance | Sheet Thickness (mm) | Type | Sheet Thickness (mm) | Type | Shear modulus (MPa) | $E_c/E_f$ | $t_c/t_f$ |
| Example 101 | A1 Killed Steel | 0.5 | PolyPropylene | 1 | Adhesive 1 | 300 | $3.2 \times 10^{-3}$ | 2 |
| Example 102 | A1 Killed Steel | 0.36 | PolyPropylene | 1.28 | Adhesive 1 | 300 | $3.2 \times 10^{-3}$ | 3.5 |
| Example 103 | A1 Killed Steel | 0.32 | PolyPropylene | 1.36 | Adhesive 1 | 300 | $3.2 \times 10^{-3}$ | 4.3 |
| Example 104 | A1 Killed Steel | 0.29 | PolyPropylene | 1.56 | Adhesive 1 | 300 | $3.2 \times 10^{-3}$ | 5.37931 |
| Example 105 | A1 Killed Steel | 0.32 | Wire Mesh | 1.36 | Adhesive 1 | 300 | $5.5 \times 10^{-2}$ | 4.3 |
| Example 106 | A1 Killed Steel | 0.32 | PolyPropylene | 1.36 | Adhesive 2 | 135 | $3.2 \times 10^{-3}$ | 4.3 |
| Example 107 | A1 Killed Steel | 0.32 | PolyPropylene | 1.36 | Adhesive 3 | 30 | $3.2 \times 10^{-3}$ | 4.3 |
| Example 108 | A1 Killed Steel | 0.32 | Wire Mesh | 1.36 | Brazing | 650 | $5.5 \times 10^{-2}$ | 4.3 |
| Example 109 | A1 Killed Steel | 0.32 | Foamed PolyEthylene | 1.36 | Adhesive 1 | 300 | $4.3 \times 10^{-4}$ | 4.3 |
| Comparative Example 101 | A1 Killed Steel | 0.32 | PolyPropylene | 0.36 | Adhesive 1 | 300 | $3.2 \times 10^{-3}$ | 1.1 |
| Comparative Example 102 | A1 Killed Steel | 0.58 | PolyPropylene | 0.64 | Adhesive 1 | 300 | $3.2 \times 10^{-3}$ | 1.1 |
| Comparative Example 103 | A1 Killed Steel | 0.32 | Cold Rolled Steel Sheet | 1.36 | Adhesive 1 | 300 | 1 | 4.3 |

In Table 4, the adhesive 1 was an adhesive with an epoxy resin base, employed in bonding at a coating amount of 200 g/m$^2$, a temperature of 180°C, a press force of 40 kgf/cm$^2$ (3.92 MPa), and a press time of 20 minutes. The adhesive 2 was an adhesive with a urethane resin base, employed in bonding at a coating amount of 200 g/m$^2$, a temperature of 80°C, a press force of 40 kgf/cm$^2$ (3.92 MPa), and a press time of 30 minutes. The adhesive 3 was an adhesive with elastic rubber dispersed in the adhesive 2, employed in bonding at a coating amount of 200 g/m$^2$, a temperature of 80°C, a press force of 40 kgf/cm$^2$ (3.92 MPa), and a press time of 20 minutes. The brazing employed brazing filler metal (Sn-Pb based low temperature braze, melting point 183°C) at a usage amount of 15 g/m$^2$. The shear modulus of the bonding material was measured by tensile shear testing according to JIS-K6850.

In Table 4, the polypropylene employed as the core layer had a density of 0.94 g/cm$^3$. The wire diameter of the wire mesh employed as the core layer had a diameter of 0.6 mm, and an inter-wire spacing of 1.6 mm. Moreover, $E_c$ is the Young's modulus of the core layer, $E_f$ is the Young's modulus of the surface layers, $t_c$ is the sheet thickness of the core layer, and $t_f$ is the sheet thickness of the surface layers, as described above.

Collision Performance Evaluation Testing

Collision performance evaluation was then performed for the impact absorbing components configured by the laminated metal sheets according to each of the examples and each of the comparative examples manufactured as described above. More specifically, laminated metal sheets according to each of the examples and each of the comparative examples configured as listed in Table 4 were employed for forming by bending using a press brake, and the impact absorbing components with the hat shaped profile of length 200 mm as illustrated in Fig. 11A and Fig. 11B were manufactured. Fig. 11A is a cross-section of an impact absorbing component according to the present example, sectioned in a cross-section orthogonal to the ridge line direction that is the impact absorption direction. Fig. 11B is a perspective view of the same.

The collision performance evaluation of the manufactured impact absorbing components was performed by drop testing. More specifically, the impact absorbing components were each disposed such that the ridge line direction was aligned with the impact absorption direction, and the end portion at the opposite side of the impact absorbing component to the end portion a cone collides with was fixed to a jig. The collision end side of the impact absorbing component was then collided with at a speed of 30 km/h by letting the cone of mass 120 kg fall freely thereon from a height of 3.5 m.

The amount of impact absorption energy was computed up to crushing of 100 mm from the load-displacement curve during the drop testing as described above. In order to evaluate weight reduction of the components, the amount of impact absorption energy was divided by the mass of the component to give an amount of impact absorption energy per unit mass.

Moreover, the average bucking wavelength was computed from the load-displacement curve of the drop test. More specifically, displacement was measured when the load was at a minimum for each period of rising and falling load. The bucking wavelength was then computed for each period by subtracting from the displacement when the load is at the previous minimum, the displacement when the load is at the next minimum. The bucking wavelength is computed by a similar method for each period, and then the average bucking wavelength computed by taking the arithmetic mean. The amount of impact energy absorption per unit mass computed as described above and the evaluation results of the average bucking wavelengths are listed in Table 5. In Table 5, the meaning of "A", "B", and "C" in the column for bucking performance is the same as the meanings of "A", "B", and "C" in the deformation forms of Table 2.

Table 5

| | Total Thickness (mm) | Impact Absorption Energy Per Unit Mass (J/g) | Average Bucking Wavelength (mm) | Deformation Form |
|---|---|---|---|---|
| Example 101 | 2 | 6.3 | 15.6 | A |
| Example 102 | 2 | 7.0 | 9.3 | A |
| Example 103 | 2 | 7.7 | 7.1 | A |
| Example 104 | 2.14 | 7.9 | 6.9 | B |
| Example 105 | 2 | 10.4 | 8.3 | A |
| Example 106 | 2 | 7.4 | 7.0 | A |
| Example 107 | 2 | 7.2 | 6.8 | A |
| Example 108 | 2 | 9.2 | 10.3 | A |

(continued)

|  | Total Thickness (mm) | Impact Absorption Energy Per Unit Mass (J/g) | Average Bucking Wavelength (mm) | Deformation Form |
|---|---|---|---|---|
| Example 109 | 2 | 7.0 | 6.6 | A |
| Comparative Example 101 | 1 | 4.3 | 25.2 | B |
| Comparative Example 102 | 1.8 | 4.6 | 23.6 | A |
| Comparative Example 103 | 2 | 3.2 | 46.2 | C |

It is apparent from reference to Table 5 that the impact absorbing components according to the Examples 101 to 109 of the present invention have a shorter average bucking wavelength, and an increased amount of impact energy absorption per unit mass, than the impact absorbing components of the Comparative Examples 101 to 103. More specifically, due to $t_c/t_f$ being less than 2.0 in the Comparative Examples 101 and 102, the average bucking wavelength is longer, and there is a decreased amount of impact energy absorption. Moreover, although $t_c/t_f$ is within the range of the present invention in the Comparative Example 103, due to the Young's modulus of the core layer and the Young's modulus of the surface layers being the same as each other, the buckling deformation behavior exhibited is essentially the same as that of an impact absorbing component configured from a single material, and it is apparent that the average bucking wavelength is longer, and there is effectively a reduction in the amount of impact energy absorption.

Moreover, due to $t_c/t_f$ lying within a preferable range for the present exemplary embodiment in the Examples 102, 103, and 105 to 109, it is apparent that the average bucking wavelength is shorter, and the amount of impact energy absorption per unit mass is further increased. On the other hand, due to $t_c/t_f$ being less than 3.5 in the Example 101, the average bucking wavelength is greater than that of the Examples 102, 103, and 105 to 109. Moreover, due to $t_c/t_f$ exceeding 5.0 in the Example 104, the bucking form is "B".

Moreover, due to the shear modulus of the bonding layers lying within a preferable range of the present exemplary embodiment in Examples 101 to 107, and 109, it is apparent that the average bucking wavelength is shorter. However, due to the shear modulus of the bonding layers exceeding 500 MPa in the Example 108, the average bucking wavelength is longer and the amount of impact energy absorption is reduced compared to the Example 105 that has other conditions the same.

Due to the Young's modulus ratio ($E_c/E_f$) of the core layer to the surface layers lying within a preferable range of the present exemplary embodiment in Examples 101 to 108, it is apparent that the amount of impact energy absorption per unit mass is further increased. However, due to the Young's modulus ratio ($E_c/E_f$) of the core layer to the surface layers being less than $1 \times 10^{-3}$ in Example 109, the amount of impact energy absorption is reduced compared to the Example 105 that has other conditions the same.

Moreover, simulations were performed on the laminated metal sheets according to the Comparative Examples 101 and 102, and the change in average bucking wavelength with respect to the Young's modulus ratio ($E_c/E_f$) of the core layer to the surface layers evaluated while varying the Young's modulus ratio ($E_c/E_f$) of the core layer to the surface layers. buckling Eigenvalue analysis was performed in the simulation using a non-linear analysis program Marc. The results of this evaluation are illustrated in Fig. 19. Fig. 19 is a graph illustrating the average bucking wavelength with respect to Young's modulus ratio ($E_c/E_f$) in the impact absorbing components according to the Example 103, and the Comparative Examples 101 and 102. The vertical axis in Fig. 19 is the average bucking wavelength, and the horizontal axis is the common logarithm of the Young's modulus ratio ($E_c/E_f$).

As illustrated in Fig. 19, it is apparent that even with such a Young's modulus ratio ($E_c/E_f$) of the core layer to the surface layers, the Example 103 (total thickness 2.0 mm, $t_c/t_f$ = 4.3) has a shorter average bucking wavelength than that of the Comparative Example 101 (total thickness 1.0 mm, $t_c/t_f$ = 1.1). Namely, in the Example 103, due to the $t_c/t_f$ lying within a preferable range of the present exemplary embodiment, it is apparent that the average bucking wavelength can be made shorter than that of the Comparative Examples 101 and 102 irrespective of the Young's modulus ratio ($E_c/E_f$) of the core layer to the surface layers.

Moreover, the bending rigidity of the Example 103 and the Comparative Example 102 is $9.6 \times 10^4$ N·cm², and the bending rigidity of the Comparative Example 101 is $1.7 \times 10^4$ N·cm². Namely, the average bucking wavelength of Example 103 can be made shorter than that of Comparative Example 102 without lowering the strength of the laminated metal sheet (specifically the bending rigidity).

Moreover, with reference to Fig. 19, the Example 103 has, in particular, a Young's modulus ratio ($E_c/E_f$) of the core layer to the surface layers lying within the range of from $1 \times 10^{-3}$ to $1 \times 10^{-1}$, enabling the average bucking wavelength to be made shorter than those of the Comparative Example 102 and 103. More specifically, the amount of reduction in average bucking wavelength is smaller in cases in which the Young's modulus ratio ($E_c/E_f$) of the core layer to the surface layers exceeds $1 \times 10^{-1}$, and so is unfavorable. Moreover, the average load W during buckling deformation falls due to the lower $E_c$ of the core layer in cases in which the Young's modulus ratio ($E_c/E_f$) of the core layer to the surface layers is less than $1 \times 10^{-3}$, and so is unfavorable due to the lower impact energy absorption efficiency.

Next, in a simulation using Marc similar to that described above, the change in average bucking wavelength with respect to Young's modulus ratio ($E_c/E_f$) of the core layer to the surface layers was evaluated in hat shaped profile members with respective ridge line separations L of 50 mm, 65 mm, and 80 mm. The evaluation results are illustrated in Fig. 20. Fig. 20 is a graph illustrating the average bucking wavelength with respect to profiles of the impact absorbing component. The vertical axis in Fig. 20 is the average bucking wavelength, and the horizontal axis is the common logarithm of the Young's modulus ratio ($E_c/E_f$).

It is apparent, with reference to Fig. 20, that in cases in which the ridge line separation L is from 50 mm to 80 mm in the impact absorbing component, there is a more significant reduction in the average bucking wavelength at from $1 \times 10^{-3}$ to $1 \times 10^{-1}$ that is the preferable Young's modulus ratio ($E_c/E_f$) range of the present exemplary embodiment. However, cases in which the ridge line separation L exceeds 80 mm are unfavorable due to the average bucking wavelength becoming longer, and stable bellows-shaped axial crushing not readily occurring. Cases in which the ridge line separation L is less than 50 mm are unfavorable due to the profile of the impact absorbing component becoming complicated, and imposed profile limitations.

As is apparent from the above results, the impact absorbing component according to the present exemplary embodiment is configured by a laminated metal sheet in which surface layers made from sheet metal having a higher Young's modulus than that of a core layer are bonding laminated onto both faces of the core layer, with a sheet thickness ratio ($t_c/t_f$) of the sheet thickness of the core layer $t_c$ to the sheet thickness of the surface layers $t_f$ of from 2.0 to 7.0, thereby enabling a shorter bucking wavelength and enabling the impact energy absorption efficiency to be improved.

Moreover the impact absorbing component according to the present exemplary embodiment is able make the bucking wavelength shorter even without complicated working of the profile of the impact absorbing component, enabling simplification of the profile of the impact absorbing component. Moreover, in the impact absorbing component according to the present exemplary embodiment there is no need to further lower the Young's modulus ratio of the core layer to the surface layers in the laminated metal sheet in order to make the bucking wavelength shorter, enabling the impact energy absorption efficiency to be improved without lowering the strength of the impact absorbing component.

Moreover, in the impact absorbing component according to the present exemplary embodiment, configuration is made with a laminated metal sheet having a large proportion of core layer having a low Young's modulus and comparatively low density, enabling better weight reduction to be achieved than in a conventional impact absorbing component. Thus the impact absorbing component according to the present exemplary embodiment enables a greater weight reduction to be achieved.

Detailed explanation has been given above regarding the second exemplary embodiment of the present invention with reference to the appended drawings, however the present invention is not limited to these examples. It would be clear to a person of ordinary skill in the art that various modifications and improvements are obtainable within the range recited in the scope of the claims, and obviously it should be understood that such modifications and improvements fall within the technical scope of the present invention.

All publications, patent applications and technical standards mentioned in the present specification are incorporated by reference in the present specification to the same extent as if the individual publication, patent application, or technical standard was specifically and individually indicated to be incorporated by reference.

The present invention may be suitably applied not only in ordinary vehicles, but is also suitably employed as an impact absorbing component for transport vehicles such as general vehicles ranging from light vehicles to heavy vehicles such as trucks and buses, and trains.

Explanation of the Reference Numerals

| | |
|---|---|
| 1 | impact absorbing component |
| 2 | side face |
| 3 | ridge line |
| 5A, 5B | surface layer |
| 7A, 7B | bonding layer |
| 9 | laminated metal sheet |
| 10 | core layer |
| 11 | hat member of open cross-section structure |

| 12 | flange |
|----|--------|
| 13 | rear plate |
| 14 | hole |
| 15 | end portion |
| 16 | side face end portion |
| 25 | core layer |

**Claims**

1. An impact absorbing component that absorbs impact energy when impact load is exerted on one impact absorbing direction end portion of the component, the impact absorbing component comprising:

   a member that is formed, by working a laminated metal sheet of uniform cross-section configured by a core layer and lamination bonding surface layers of sheet metal onto both faces of the core layer,
   wherein a Young's modulus and density of the surface layers of sheet metal are higher than a Young's modulus and a density of the core layer,
   wherein the member includes at least two ridge lines, and the member configures 50% or more of the maximum peripheral length of a cross-section of the impact absorbing component, and
   wherein a sheet thickness ratio (tc/tf) of the sheet thickness of the core layer (tc) to the sheet thickness of the surface layers (tf) is 10.0 or less.

2. The impact absorbing component of claim 1, wherein the profiles of component cross-sections of the impact absorbing component are all open cross-section profiles.

3. The impact absorbing component of claim 1, wherein a portion of the profiles of component cross-sections of the impact absorbing component are open cross-section profiles.

4. The impact absorbing component of claim 1, wherein the profiles of component cross-sections of the impact absorbing component are all closed cross-section profiles.

5. The impact absorbing component of any one of claims 1 to 4, wherein the laminated metal sheet has a Young's modulus ratio ($E_c/E_f$) of the core layer Young's modulus ($E_c$) to the surface layer Young's modulus ($E_f$) of from 1/10 to 1/100000.

6. The impact absorbing component of any one of claims 1 to 5, wherein the Young's modulus ratio ($E_c/E_f$) is from 1/10 to 1/1000.

7. The impact absorbing component of any one of claims 1 to 6, wherein a separation between the ridge lines is at least 10 mm.

8. The impact absorbing component of any one of claims 1 to 7, wherein a shear bond strength between the surface layers and the core layer is 25 MPa or greater.

9. The impact absorbing component of any one of claims 1 to 8, wherein bonding lamination between the surface layers and the core layer is bonding by brazing filler metal or electro conductive adhesive.

10. An impact absorbing component that absorbs impact energy when impact load is exerted on one impact absorbing direction end portion of the component, the impact absorbing component comprising a member formed by working a laminated metal sheet of uniform cross-section configured by laminating surface layers of sheet metal having a higher Young's modulus than a Young's modulus of a core layer onto both faces of the core layer, with a sheet thickness ratio ($t_c/t_f$) of the sheet thickness of the core layer ($t_c$) to the sheet thickness of the surface layers ($t_f$) of from 2.0 to 7.0.

11. The impact absorbing component of claim 10, wherein the sheet thickness ratio ($t_c/t_f$) is from 3.5 to 5.0.

12. The impact absorbing component of claim 10 or claim 11, wherein the Young's modulus ratio ($E_c/E_f$) is from 1/10 to 1/1000.

13. The impact absorbing component of any one of claim 10 to claim 12, wherein:

   the laminated metal sheet is worked into a profile including at least four ridge lines; and
   respective spacings between the ridge lines are from 50 mm to 80 mm.

14. The impact absorbing component of any one of claims 10 to 13, wherein:

   the laminated metal sheet further comprises a bonding layer between the surface layers and the core layer; and
   a shear modulus of the bonding layer is from 30 MPa to 500 MPa.


**Amended claims under Art. 19.1 PCT**

1. An impact absorbing component that absorbs impact energy by buckling deformation when impact load is exerted on one impact absorbing direction end portion of the component, the impact absorbing component comprising:

   a member that is formed, by working a laminated metal sheet of uniform cross-section configured by a core layer and lamination bonding surface layers of sheet metal onto both faces of the core layer,
   wherein a Young's modulus and density of the surface layers of sheet metal are higher than a Young's modulus and a density of the core layer,
   wherein the member includes at least two ridge lines, and the member configures 50% or more of the maximum peripheral length of a cross-section of the impact absorbing component, and
   wherein a sheet thickness ratio ($t_c/t_f$) of the sheet thickness of the core layer (tc) to the sheet thickness of the surface layers (tf) is 10.0 or less.

2. The impact absorbing component of claim 1, wherein the profiles of component cross-sections of the impact absorbing component are all open cross-section profiles.

3. The impact absorbing component of claim 1, wherein a portion of the profiles of component cross-sections of the impact absorbing component are open cross-section profiles.

4. The impact absorbing component of claim 1, wherein the profiles of component cross-sections of the impact absorbing component are all closed cross-section profiles.

5. The impact absorbing component of any one of claims 1 to 4, wherein the laminated metal sheet has a Young's modulus ratio ($E_c/E_f$) of the core layer Young's modulus ($E_c$) to the surface layer Young's modulus ($E_f$) of from 1/10 to 1/100000.

6. The impact absorbing component of any one of claims 1 to 5, wherein the Young's modulus ratio ($E_c/E_f$) is from 1/10 to 1/1000.

7. The impact absorbing component of any one of claims 1 to 6, wherein a separation between the ridge lines is at least 10 mm.

8. The impact absorbing component of any one of claims 1 to 7, wherein a shear bond strength between the surface layers and the core layer is 25 MPa or greater.

9. The impact absorbing component of any one of claims 1 to 8, wherein bonding lamination between the surface layers and the core layer is bonding by brazing filler metal or electro conductive adhesive.

10. An impact absorbing component that absorbs impact energy by buckling deformation when impact load is exerted on one impact absorbing direction end portion of the component, the impact absorbing component comprising a member formed by working a laminated metal sheet of uniform cross-section configured by laminating surface layers of sheet metal having a higher Young's modulus than a Young's modulus of a core layer onto both faces of the core layer, with a sheet thickness ratio ($t_c/t_f$) of the sheet thickness of the core layer ($t_c$) to the sheet thickness of the surface layers ($t_f$) of from 2.0 to 7.0.

11. The impact absorbing component of claim 10, wherein the sheet thickness ratio ($t_c/t_f$) is from 3.5 to 5.0.

**12.** The impact absorbing component of claim 10 or claim 11, wherein the Young's modulus ratio ($E_c/E_f$) is from 1/10 to 1/1000.

**13.** The impact absorbing component of any one of claim 10 to claim 12, wherein:

the laminated metal sheet is worked into a profile including at least four ridge lines; and
respective spacings between the ridge lines are from 50 mm to 80 mm.

**14.** The impact absorbing component of any one of claims 10 to 13, wherein:

the laminated metal sheet further comprises a bonding layer between the surface layers and the core layer; and
a shear modulus of the bonding layer is from 30 MPa to 500 MPa.

FIG.1A

FIG.1B

FIG.1C

FIG.1D

FIG.1E

FIG.1F

FIG.1G

FIG.1H

## FIG.2

## FIG.3

FIG.4A

21

20

FIG.4B

21

22

FIG.4C

21

$H_1$

22

FIG.4D

FIG.4E

FIG.5

## FIG.6

FIG.7A

FIG.7B

FIG.7C

FIG.8

FIG.9A

10

5A

5B

FIG.9B

10

9a

5B

5A

FIG.10

## FIG.11A

## FIG.11B

## FIG.12A

## FIG.12B

FIG.13 {

20mm

20mm

20mm

3

3

3

3

FIG.14

12

11

12

13

FIG.15A

70mm

200mm

C

FIG.15B

1 5

1 5

## FIG.16A

## FIG.16B

# FIG.17

## FIG.18A

20A

## FIG.18B

20B

## FIG.19

FIG.20

## INTERNATIONAL SEARCH REPORT

| International application No. |
|---|
| PCT/JP2014/055343 |

**A. CLASSIFICATION OF SUBJECT MATTER**
*F16F7/12*(2006.01)i, *F16F7/00*(2006.01)i

According to International Patent Classification (IPC) or to both national classification and IPC

**B. FIELDS SEARCHED**

Minimum documentation searched (classification system followed by classification symbols)
F16F7/12, F16F7/00

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 3-45421 A (Mazda Motor Corp.), 27 February 1991 (27.02.1991), page 2, lines 1 to 19; fig. 1 to 2 (Family: none) | 1-14 |
| Y | JP 58-160141 A (Kawasaki Steel Corp.), 22 September 1983 (22.09.1983), page 1, right column, lines 5 to 10; page 3, upper right column, lines 14 to 20; page 3, lower left column, lines 6 to 16; page 3, lower right column, table 1 & US 4482600 A & EP 89435 A2 | 1-14 |

☒ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 14 May, 2014 (14.05.14) | 27 May, 2014 (27.05.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/055343

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 7-101354 A  (Isuzu Motors Ltd.), 18 April 1995 (18.04.1995), paragraphs [0003], [0009], [0010]; fig. 1 to 4, 10 (Family: none) | 2,3,5-9, 13-14 |
| Y | JP 2007-283875 A  (Toyota Motor Corp.), 01 November 2007 (01.11.2007), paragraph [0019]; fig. 2 to 3 (Family: none) | 4-9 |
| Y | JP 2002-286066 A  (Kawasaki Heavy Industries, Ltd.), 03 October 2002 (03.10.2002), paragraphs [0017], [0019] (Family: none) | 5-9,12-14 |
| Y | JP 1-127332 A  (Kawasaki Steel Corp.), 19 May 1989 (19.05.1989), page 2, upper right column, line 12 to lower left column, line 1; page 4, table 1, invention example 1 (Family: none) | 8-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2783100 B
- JP H07224874 A
- JP 2006207724 A
- JP 2012081826 A

**Non-patent literature cited in the description**

- *Journal of Society of Automotive Engineers of Japan,* 1974, 60
- **TYMOSHENKO.** Buckling Theory. Corona Publishing, 1971, 221-225
- *Jidoushagijutsu,* 1993, vol. 47 (4), 57